(19) Europäisches Patentamt
European Patent Office
Office européen des brevets

(11) **EP 3 274 174 B1**

(12) **EUROPÄISCHE PATENTSCHRIFT**

(45) Veröffentlichungstag und Bekanntmachung des Hinweises auf die Patenterteilung:
**06.07.2022   Patentblatt 2022/27**

(21) Anmeldenummer: **16708401.1**

(22) Anmeldetag: **04.03.2016**

(51) Internationale Patentklassifikation (IPC):
*B41F 19/00* (2006.01)    *B44C 1/10* (2006.01)
*B44C 1/14* (2006.01)    *B44C 1/16* (2006.01)
*B41J 3/28* (2006.01)    *B41J 11/00* (2006.01)

(52) Gemeinsame Patentklassifikation (CPC):
**B41F 19/004; B41F 19/005; B44C 1/105; B44C 1/14; B44C 1/16**

(86) Internationale Anmeldenummer:
**PCT/EP2016/054701**

(87) Internationale Veröffentlichungsnummer:
**WO 2016/150681 (29.09.2016 Gazette 2016/39)**

(54) **VERFAHREN UND VORRICHTUNG ZUM APPLIZIEREN EINER FOLIE**

METHOD AND APPARATUS FOR APPLYING A FILM

PROCÉDÉ ET DISPOSITIF D'APPLICATION D'UNE FEUILLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2015   DE 102015104321**
**18.12.2015   DE 102015122178**

(43) Veröffentlichungstag der Anmeldung:
**31.01.2018   Patentblatt 2018/05**

(73) Patentinhaber: **Leonhard Kurz Stiftung & Co. KG**
**90763 Fürth (DE)**

(72) Erfinder:
• **PLAIA, Ulrike**
**90587 Veitsbronn (DE)**

• **KOSALLA, Konstantin**
**90429 Nürnberg (DE)**

(74) Vertreter: **Louis Pöhlau Lohrentz**
**Patentanwälte**
**Postfach 30 55**
**90014 Nürnberg (DE)**

(56) Entgegenhaltungen:
EP-A1- 2 163 394      EP-A2- 0 269 287
EP-A2- 2 172 347      WO-A1-2008/080486
WO-A1-2014/005823    DE-C1- 3 924 848
JP-A- 2009 226 863

**Beschreibung**

Die Erfindung betrifft ein Verfahren sowie eine Applikationsvorrichtung zum Applizieren einer Übertragungslage einer Folie auf ein Substrat sowie eine Druckvorrichtung mit einer solchen Applikationsvorrichtung.

Die Beschichtung von Folien oder Substraten mit digitalen Druckverfahren für eine Folienapplikation dient der Erzeugung von zusätzlichen dekorativen Effekten. Dabei wird üblicherweise mittels Tintenstrahldruck direkt auf das Substrat oder die Folie ein kationisch härtender Klebstoff aufgebracht. Durch eine kationisch arbeitende Trocknereinheit wird der Klebstoff verfestigt. Die zu applizierenden Schichten der Folie haften, vermittelt durch den Klebstoff, auf dem Substrat und werden anschließend von einer Trägerlage der Folie abgelöst. Alternativ dazu ist es bekannt, mittels xerographischen Druckverfahren auf das Substrat einen thermoplastischen Toner aufzubringen. Die zu applizierenden Schichten der Folie haften bei Applikation mittels Druck und Hitze, vermittelt durch den dadurch aufschmelzenden Toner, auf dem Substrat und werden anschließend von einer Trägerlage der Folie abgelöst.

Bei Tintenstrahldruck des Klebstoffs direkt auf das Substrat mit anschließender Folienapplikation kann durch Verlaufen und Aufsaugen des Klebstoffs in das Substrat keine annehmbare Qualität erzeugt werden. Eine Folienapplikation unter Druck mit einer Presswalze verstärkt diesen Sachverhalt negativ. Durch den Druck und das Verlaufen des Klebstoffs werden zerklüftete Folienkanten auf dem Substrat erzeugt. Die Foliendeckung ist zudem oft löchrig. Der Glanz der Folienoberfläche nach der Applikation auf das Substrat ist stark von der Oberflächenbeschaffenheit des Substrats abhängig. Auf nicht-saugenden Substraten, z.B. Kunststoffen wie PE, PP oder PET wird der Klebstoff schnell durch die Presswalze in die Breite verdrängt. Insgesamt kann so meist keine hochauflösende, kantenscharfe Folienapplikation sichergestellt werden.

Das Dokument WO 2014/005823 A1 beschreibt ein Verfahren und eine Vorrichtung zum Versehen eines Substrats mit einem Aufdruck, sowie ein mit einem Aufdruck versehenes Substrat.

Das Dokument EP 2 172 347 A2 beschreibt eine Transferfolie zur Verwendung in einem Kaltfolientransferverfahren.

Das Dokument EP 0 269 287 A2 beschreibt Verfahren und Vorrichtungen zum Behandeln von Werkstücken an einer gewünschten Stelle gemäß einem gewünschten Muster.

Aufgabe der vorliegenden Erfindung ist es, ein Verfahren, eine Applikationsvorrichtung und eine Druckvorrichtung bereitzustellen, mittels welchen eine hochwertige Folienapplikation ermöglicht wird.

Diese Aufgabe wird durch ein Verfahren mit den Merkmalen des Anspruchs 1, eine Applikationsvorrichtung mit den Merkmalen des Anspruchs 12 und durch eine Druckvorrichtung mit den Merkmalen des Anspruchs 15 gelöst.

Eine derartige Applikationsvorrichtung kann in eine Druckvorrichtung mit einem Tintenstrahldruckkopf integriert werden, welcher in zwei orthogonalen Richtungen relativ zu einem zu bedruckenden Substrat beweglich angeordnet ist, wobei die Applikationsvorrichtung ebenfalls in zwei orthogonalen Richtungen relativ zu dem zu bedruckenden Substrat beweglich angeordnet ist. Durch den Auftrag des Klebstoffs auf die Übertragungslage der Folie wird die Qualität der Folienapplikation verbessert. Hierdurch können Probleme vermieden werden, die üblicherweise beim direkten Klebstoffauftrag auf das Substrat entstehen. So kann die Übertragungslage beispielsweise durch eine geeignete Grundierung für den Klebstoffauftrag optimiert werden, so dass ein genauerer und randschärferer Auftrag als beim Klebstoffauftrag auf insbesondere poröse Substrate wie z.B. Papier erzielt wird. Die Grundierung kann dabei als haftvermittelnder Untergrund mit genau einstellbaren Oberflächeneigenschaften für den aufgetragenen Klebstoff dienen. Dies erweitert auch das Spektrum der Substrate, auf die eine Folienapplikation möglich ist. Insbesondere sind mit dem Verfahren und der Vorrichtung eine Vielzahl von Substraten verarbeitbar, wie beispielsweise verschiedene Papiere, Kunststoffe mit jeweils unterschiedlichen Oberflächeneigenschaften, insbesondere unterschiedlichen Rauigkeiten und/oder Saugfähigkeiten.

In einer vorteilhaften Ausführungsform ist es möglich, die Folienapplikation auf ein Substrat, welches als dreidimensionaler, insbesondere als zylindrischer, ovaler, rechteckiger, flacher Gegenstand vorliegt, zu ermöglichen, insbesondere an Rundtaktmaschinen oder Lineartaktmaschinen, bei denen die Folienapplikation nur einen Teil der am Substrat vorgenommenen Arbeitsschritte ausmacht. In solchen Maschinen erfolgen beispielsweise vor und/oder nach der Folienapplikation noch Bedruckungen und/oder Beschichtungen unterschiedlichster Art und Weise. Insbesondere bei der Folienapplikation wird das Substrat entweder um eine Rotationsachse drehbar oder fest fixiert von einer Halteeinrichtung gehalten und anschließend die Übertragungslage der Folie von einer Andrückeinrichtung auf das Substrat gedrückt und gleichzeitig der Klebstoff gehärtet.

Dabei ist es bevorzugt, wenn die Andrückeinrichtung zumindest in Teilbereichen für UV-Strahlung transparent ist. Dies ermöglicht, dass die Andrückeinrichtung zwischen einer UV-Strahlungsquelle, die die UV-Strahlung erzeugt, und der Halteeinrichtung angeordnet sein kann. Die Bereiche, in denen die Andrückschicht transparent ist, können sich dabei an den Bereichen, an denen die Halteeinrichtung transparent ist, orientieren. Es kann aber auch die Andrückschicht vollkommen transparent sein, während die Halteeinrichtung nur stellenweise transparent ist.

Bevorzugt ist die Andrückeinrichtung und/oder die Andrückschicht im Wellenlängenbereich von 250 nm bis 420 nm, bevorzugt im Bereich von 380 nm bis 420 nm, besonders bevorzugt 380 nm bis 400 nm, für UV-Strahlung transparent oder transluzent. Die Transparenz oder Transluzenz soll dabei insbesondere 30% bis 100% betragen, bevorzugt 40% bis 100%. Die Transparenz oder Transluzenz ist dabei von der Dicke der Andrückschicht abhängig. Eine niedrigere Transparenz oder Transluzenz kann durch höhere UV-Intensität ausgeglichen werden.

Beispielsweise kann die UV-Strahlungsquelle innerhalb eines Zylinders der Andrückeinrichtung angeordnet sein. Hierzu ist der Zylinder zumindest stellenweise als Hohlzylinder ausgeführt. Das Material des Zylinders ist dabei so gewählt, dass die Wellenlängen der UV-Strahlung, die für das Härten des Klebstoffs benötigt werden, durch den Zylinder transmittiert werden können. Der Zylinder kann vollständig für das UV-Strahlung transparent sein; es können aber auch im Zylinder transparente Fenster vorgesehen sein, sodass nur dann UV-Strahlung aus dem Zylinder austritt, wenn gerade das UV-Strahlung zum Härten des Klebstoffs benötigt wird.

Insbesondere kann der Bereich des Substrats, der mit UV-Strahlung belichtet werden soll, eingestellt werden, damit die Härtung des UV-Klebers beim Andrücken der Transferfolie auf den Klebstoff so weit fortgeschritten ist, dass die Übertragungslage der Folie am Substrat haftet und von der Trägerfolie gelöst werden kann. Je nach verwendetem Klebstoff und nach Intensität der UV-Strahlung kann es hierzu erforderlich sein, den Klebstoff am Substrat schon vor der Berührlinie zwischen Substrat und Folie zu belichten. Die Einstellung des zu belichtenden Bereichs kann beispielsweise durch (ggf. einstellbare oder wechselbare) Blenden zwischen UV-Strahlungsquelle und Substrat erfolgen. Eine oder mehrere Blenden können auch direkt an der Andrückeinrichtung angebracht sein. Die Einstellung kann auch durch Einstellen der Divergenz der von der UV-Strahlungsquelle emittierten UV-Strahlung erfolgen.

In einer weiteren bevorzugten Ausführungsform des Verfahrens weist die Andrückvorrichtung ferner eine flexible Andrückschicht auf der Halteeinrichtung auf. Hierdurch können Unregelmäßigkeiten des dreidimensionalen Substrats, der Folie und/oder des maschinellen Aufbaus ausgeglichen werden. Die flexible Andrückschicht kann beispielsweise aus Silikon bestehen.

Bevorzugt ist die Andrückeinrichtung und/oder die Andrückschicht aus Silikon und hat in dem mit UV-Strahlung zu durchstrahlenden Bereich eine Dicke im Bereich von 1 mm bis 20 mm, bevorzugt von 3 mm bis 10 mm. Das Silikon hat bevorzugt eine Härte von 20° Shore A bis 70° Shore A, bevorzugt 20° Shore A bis 50° Shore A. Das Silikon kann ein Heiß-Vulkanisat oder Kalt-Vulkanisat sein, bevorzugt ein Heiß-Vulkanisat sein.

Es ist ebenso möglich, die Andrückeinrichtung und/oder die Andrückschicht aus mehreren Silikon-Schichten aufzubauen. Dabei können die einzelnen Silikonschichten jeweils unterschiedliche Härten aufweisen. Beispielsweise kann eine erste, innenliegende Schicht eine Härte von 10° Shore A bis 50° Shore A, bevorzugt 15° Shore A bis 35° Shore A aufweisen und eine außenliegende Schicht eine Härte von 20° Shore A bis 70° Shore A, bevorzugt von 20° Shore A bis 50° Shore A aufweisen.

Die Andrückeinrichtung kann mit der Andrückschicht insbesondere kraftschlüssig und/oder formschlüssig verbunden sein. Dadurch kann eine besonders haltbare Verbindung erreicht werden.

Die Form der Andrückschicht kann flach oder dreidimensional geformt (dreidimensional gewölbte oder gebogene Kontur mit einer glatten oder strukturierten/texturierten Oberfläche) sein. Flache Andrückschichten eignen sich besonders zur Applikation der Folie auf zylindrischen Geometrien und dreidimensional geformte Andrückschichten eignen sich besonders für unrunde, ovale und eckige Geometrien. Eine strukturierte und/oder texturierte Oberfläche der Andrückschicht kann auch dazu vorteilhaft sein, um diese Struktur und/oder Textur beim Transferieren der Übertragungslage der Folie überlagernd mit auf die Oberfläche des Substrats zu übertragen. Die Struktur und/oder Textur kann dabei ein Endlosmuster oder Endlosmotiv sein oder auch ein einzelnes Muster und/oder Motiv oder eine Kombination daraus.

Es hat sich insbesondere in Versuchsreihen ergeben, dass die Oberfläche einer Silikon-Oberfläche der Andrückschicht für die zu verarbeitende Folie adhäsiv sein kann. Dabei liegt die Oberflächenrauigkeit (Mittenrauwert) einer solchen adhäsiven Oberfläche erfahrungsgemäß unterhalb von ca. 0,5 $\mu$m, insbesondere zwischen 0,06 $\mu$m und 0,5 $\mu$m, bevorzugt zwischen etwa 0,1 $\mu$m und 0,5 $\mu$m. Bei einer solchen adhäsiven Oberfläche ist es vorteilhaft, wenn eine Zwischenschicht insbesondere aus PET, zwischen Andrückschicht und Folie vorgesehen ist. Die Zwischenschicht verringert die Adhäsivität der Andrückschicht und erleichtert die Verarbeitung der Folie erheblich, weil die Folie nicht mehr störend an der Oberfläche der Andrückschicht haften bleibt. Die Dicke der Zwischenschicht erhöht die effektive Härte des Ausgleichseffektes des Silikonstempels. Nachfolgend einige beispielhafte Ausführungsformen:

5 mm dicke Andrückschicht aus Silikon (49° Shore A) mit 15 $\mu$m dicker Zwischenschicht (PET-Folie) ergibt 73° Shore A (entspricht 49 % Erhöhung).

5 mm dicke Andrückschicht aus Silikon (49° Shore A) mit 50 $\mu$m dicker Zwischenschicht (PET-Folie) ergibt 85° Shore A (entspricht 70 % Erhöhung).

10 mm dicke Andrückschicht aus Silikon (47° Shore A) mit 15 $\mu$m dicker Zwischenschicht (PET-Folie) ergibt 71° Shore A (entspricht 51 % Erhöhung).

10 mm dicke Andrückschicht aus Silikon (47° Shore A) mit 50 $\mu$m dicker Zwischenschicht (PET-Folie) ergibt 78° Shore A (entspricht 59 % Erhöhung).

Bei diesen Angaben ist zu beachten, dass seitens der Definition der Messvoraussetzungen für das Shore A-Messverfahren die Messung des Sandwiches aus Andrückschicht und Zwischenschicht eigentlich nicht mehr zulässig ist. Das Shore-A-Messverfahren misst eine Eindringtiefe eines Prüfkörpers zwischen 0 mm und 2,5 mm und schreibt eine Mindestdicke des Prüflings von 6 mm vor. Durch die Zwischenschicht in Verbindung mit dem Shore-A-Messverfahren wird somit eine größere Härte vorgetäuscht, als tatsächlich vorhanden ist. Ein Rückschluss vom Messwert auf die tatsächliche / effektive Härte ist nicht möglich. Es lässt sich lediglich sagen, dass die effektive Härte des Sandwiches größer als die Härte des Silikonstempels ist und die Folie die Gesamthärte des Sandwiches dominiert und definiert, unabhängig von der Dicke der Silikonschicht.

Bevorzugt ist die Andrückschicht mit einer nicht adhäsiven Oberfläche versehen, sodass der Einsatz einer Zwischenschicht entfallen kann. In diesem Fall verhält sich die Gesamtanordnung weicher, sodass in Folge eine kleinere Anpresskraft zur Anpressung des Substrats an die Andrückschicht ausreichend ist. Dabei liegt die Oberflächenrauigkeit (Mittenrauwert) einer solchen nicht adhäsiven Oberfläche erfahrungsgemäß oberhalb von ca. 0,5 $\mu$m, insbesondere zwischen 0,5 $\mu$m und 5 $\mu$m, bevorzugt zwischen etwa 0,6 $\mu$m und 4 $\mu$m, weiter bevorzugt zwischen etwa 0,8 $\mu$m und 3 $\mu$m.

Die Andrückeinrichtung bzw. die Andrückschicht sorgt für das sichere und gleichmäßige Abrollen des dreidimensionalen Substrats unter definierten Bedingungen und gleicht hierbei Form- und Bewegungstoleranzen desselben aus. Die Andrückeinrichtung bzw. die Andrückschicht weist beispielsweise bei Substrat aus Kunststoff nur eine leichte Anpresskraft auf, da diese ansonsten deformiert werden, bei Substrat aus härteren bzw. widerstandsfähigeren Materialien wie beispielsweise Glas, Porzellan oder Keramik sind in Folge höherer Formtoleranzen und/oder höherer mechanischer Stabilität des Substrats auch etwas höhere Anpresskräfte vorteilhaft. Die Anpresskraft liegt etwa bei 1 N bis 1000 N. Beispielsweise kann die Anpresskraft bei Substrat aus Kunststoff bei etwa 50 N bis 200 N liegen und bei Substrat aus Glas, Porzellan oder Keramik bei etwa 75 N bis 300 N. Um Deformationen von Kunststoffteilen zusätzlich zu verhindern, kann beispielsweise das zu dekorierende dreidimensionale Substrat während des Prägevorgangs in einer entsprechend ausgestalteten Halteeinrichtung mit Druckluft befüllt werden.

Die Vorhärtung des radikalisch härtbaren Klebstoffs verbessert die Auftragsqualität weiter. Insbesondere wird hierdurch die Viskosität des Klebstoffs erhöht, bevor die Übertragungslage in der Walzenanordnung auf das Substrat gepresst wird. Dies vermeidet ein Verlaufen oder zu starkes Verquetschen der aufgebrachten Klebstoffpixel bei der Übertragung, so dass eine besonders randscharfe Applikation der Übertragungslage auf das Substrat und eine besonders hohe Oberflächenqualität der übertragenen Schichten erzielt wird. Dabei ist ein geringfügiges Verquetschen der Klebstoffpixel durchaus wünschenswert, um direkt benachbarte Klebstoffpixel einander anzunähern und zu vereinigen. Dies kann vorteilhaft sein, um beispielsweise bei geschlossenen Flächen und/oder an Motivrändern eine Pixeligkeit der Darstellung zu vermeiden, d.h. zu vermeiden, dass einzelne Pixel störend optisch in Erscheinung treten. Das Verquetschen darf dabei nur so weit erfolgen, dass die gewünschte Auflösung nicht zu stark verringert wird.

Gegenüber kationisch härtenden Klebstoffen bietet die Verwendung von radikalisch härtbaren Klebstoffen zudem den Vorteil einer besonders schnellen Aushärtung, was die Vorhärtung des Klebstoffs vor der Folienapplikation erst ermöglicht. Ferner bilden sich bei der radikalischen Aushärtung im Gegensatz zu kationischen Systemen keine Säuren, so dass keine Einschränkungen des verwendbaren Substrats bezüglich der Säureverträglichkeit vorliegen.

Erfindungsgemäß wird zum Aufbringen des Klebstoffs ein Tintenstrahldruckkopf mit einer Auflösung von 300 bis 1200 Auftragsdüsen pro Zoll (npi, nozzles per inch) verwendet. Hierdurch wird ein hochauflösender Auftrag des Klebstoffs ermöglicht, so dass auch feine Folienstrukturen randscharf übertragen werden können. In der Regel entspricht die Auflösung des Druckkopfes dabei der erzielten Auflösung der Klebstofftropfen auf der Übertragungslage in dpi (dots per inch, Punkte pro Zoll).

Es ist ferner bevorzugt, wenn zum Aufbringen des Klebstoffs ein Tintenstrahldruckkopf mit einem Düsendurchmesser von 15 $\mu$m bis 25 $\mu$m mit einer Toleranz von nicht mehr als $\pm$ 5 $\mu$m und/oder einem Düsenabstand von 30 $\mu$m bis 150 $\mu$m, insbesondere oder einem Düsenabstand von 30 $\mu$m bis 80 $\mu$m, mit einer Toleranz von nicht mehr als $\pm$ 5 $\mu$m verwendet wird.

Durch den geringen Düsenabstand - insbesondere quer zur Druckrichtung - wird sichergestellt, dass die übertragenen Klebstofftropfen auf der Übertragungslage hinreichend nahe beieinander liegen bzw. ggf. auch überlappen, so dass über die gesamte bedruckte Fläche eine gute Haftung erzielt wird.

Es ist ferner bevorzugt, wenn der Klebstoff mit einem Flächengewicht von 0,5 g/m$^2$ bis 20 g/m$^2$ und/oder einer Schichtdicke von 0,5 $\mu$m bis 20 $\mu$m, bevorzugt von 1 $\mu$m bis 15 $\mu$m auf den zumindest einen Teilbereich aufgebracht wird. Innerhalb dieses Bereichs, der eine gute Haftung garantiert, kann die Auftragsmenge bzw. Schichtdicke des Klebstoffs in Abhängigkeit von dem verwendeten Substrat, insbesondere von dessen Saugfähigkeit, variiert werden, um das Applikationsergebnis weiter zu optimieren.

Dabei ist es zweckmäßig, wenn durch den Tintenstrahldruckkopf Klebstofftropfen mit einer Frequenz von 6 kHz bis 110 kHz bereitgestellt werden. Bei üblichen Fördergeschwindigkeiten der zu bedruckenden Folie von 10 m/min. bis 30 m/min. kann so in Förderrichtung die gewünschte Auflösung von 360 dpi bis 1200 dpi erzielt werden.

Erfindungsgemäß werden durch den Tintenstrahldruckkopf Klebstofftropfen mit einem Volumen von 2 pl bis 50 pl mit einer Toleranz von nicht mehr als ± 6% bereitgestellt. Damit wird bei den beschriebenen Auftragsauflösungen und Auftragsgeschwindigkeiten die notwendige Klebstoffmenge gleichmäßig auf die Übertragungslage aufgebracht.

Dabei ist es bevorzugt, wenn durch den Tintenstrahldruckkopf Klebstofftropfen mit einer Fluggeschwindigkeit von 5 m/s bis 10 m/s mit einer Toleranz von nicht mehr als ± 15% bereitgestellt werden. Hierdurch wird die Ablenkung der Klebstofftropfen insbesondere durch Zugluft während des Transfers vom Druckkopf zur Übertragungslage minimiert, so dass die Klebstofftropfen in der gewünschten definierten Anordnung auf der Übertragungslage landen.

Weiter ist es zweckmäßig, wenn der Klebstoff mit einer Auftragstemperatur von 40°C bis 45°C und/oder einer Viskosität von 5 mPas bis 20 mPas, bevorzugt von 7 mPas bis 15 mPas auf die Übertragungslage aufgetragen wird. Die Temperaturkontrolle des Druckkopfes stellt dabei sicher, dass der Klebstoff die gewünschte Viskosität besitzt. Von der Viskosität hängt wiederum die Pixelgröße und Pixelform des auf die Übertragungslage aufgebrachten Klebstoffs ab, wobei bei den angegebenen Werten eine optimale Verdruckbarkeit des Klebstoffs gewährleistet ist.

Sobald der Klebstoff den Druckkopf verlässt und in Kontakt mit Umgebungsluft bzw. der Übertragungslage kommt, kommt es dabei zu einer Abkühlung, durch die die Viskosität des Klebstoffs erhöht wird. Dies wirkt einem Verlaufen oder Spreiten der übertragenen Klebstofftropfen entgegen.

Es ist weiter vorteilhaft, wenn ein Abstand zwischen Tintenstrahldruckkopf und Substrat beim Aufbringen des Klebstoffs 1 mm nicht überschreitet.

Auch hierdurch wird die Beeinflussung des Klebstoffs durch Zugluft reduziert.

Vorzugsweise beträgt dabei eine Relativgeschwindigkeit zwischen Tintenstrahldruckkopf und Übertragungslage beim Aufbringen des Klebstoffs 10 m/min bis 100 m/min, insbesondere etwa 10 m/min bis 75 m/min.

Bei diesen Geschwindigkeiten wird insbesondere in Kombination mit den oben angegebenen Parametern die gewünschte Auflösung des auf die Übertragungslage gedruckten Klebstoffs erzielt.

Bevorzugt wird hierbei ein Klebstoff der folgenden Zusammensetzung verwendet (Prozentangaben bedeuten Volumen-Prozent):

| | |
|---|---|
| 2-Phenoxyethylacrylat | 10% bis 60%, bevorzugt 25% bis 50%; |
| 4-(1-Oxo-2-propenyl)-Morpholin | 5% bis 40%, bevorzugt 10% bis 25%; |
| Exo-1,7,7-trimethylbicyclo[2.2.1]- | |
| hept-2-ylacrylat | 10% bis 40 %, bevorzugt 20% bis 25%; |
| 2,4,6-Trimethylbenzoyldiphenyl- | |
| phosphinoxid | 5% bis 35%, bevorzugt 10% bis 25%; |
| Dipropylenglykoldiacrylat | 1% bis 20%, bevorzugt 3% bis 10%; |
| Urethanacrylat oligomer | 1 % bis 20%, bevorzugt 1% bis |
| 10%;Rußpigment | 0,01% bis 10%, bevorzugt 0,1 |
| bis 0,5%. | |

Eine solche Formulierung erbringt die erwünschten Eigenschaften, insbesondere die rasche Aushärtung und eine Viskosität, welche eine gute Verdruckbarkeit bei gleichzeitig stabilem und scharfem Auftrag ermöglicht.

Dabei ist es zweckmäßig, wenn ein Klebstoff mit einer Dichte von 1 g/ml bis 1,5 g/ml, bevorzugt von 1,0 g/ml bis 1,1 g/ml verwendet wird.

Bevorzugt erfolgt das Vorhärten des Klebstoffs 0,02 s bis 0,025 s nach dem Aufbringen des Klebstoffs. Hierdurch wird der Klebstoff sehr schnell nach dem Druck durch die Vorhärtung auf der Übertragungslage fixiert, so dass ein Verlaufen oder Spreiten der Klebstofftropfen weitgehend vermieden wird und die hohe Druckauflösung möglichst gut erhalten bleibt.

Es ist dabei erfindungsgemäß wenn das Vorhärten des Klebstoffs mit UV-Licht erfolgt, dessen Energie zu mindestens 90% im Wellenlängenbereich zwischen 380 nm und 420 nm abgestrahlt wird. Bei diesen Wellenlängen wird insbesondere bei den oben geschilderten Klebstoffformulierungen die radikalische Aushärtung zuverlässig in Gang gesetzt.

Es ist weiter vorteilhaft, wenn das Vorhärten des Klebstoffs mit einer Brutto-Bestrahlungsstärke von 2 W/cm$^2$ bis 5 W/cm$^2$ und/oder einer Netto-Bestrahlungsstärke von 0,7 W/cm$^2$ bis 2 W/cm$^2$ und/oder einem Energieeintrag in den Klebstoff von 8 mJ/cm$^2$ bis 112 mJ/cm$^2$ erfolgt. Hierdurch wird erreicht, dass der Klebstoff die gewünschte Viskositätserhöhung durchmacht, dabei allerdings nicht vollständig ausgehärtet wird, so dass beim Applizieren der Übertragungslage auf das Substrat die notwendige Haftwirkung des Klebstoffs erhalten bleibt.

Bevorzugt erfolgt dabei das Vorhärten des Klebstoffs mit einer Belichtungszeit von 0,02 s bis 0,056 s. Bei den erwähnten Transportgeschwindigkeiten des Substrats und den angegebenen Bestrahlungsstärken wird so der notwendige Energieeintrag für die Vorhärtung sichergestellt.

Dabei ist es zweckmäßig, wenn sich beim Vorhärten des Klebstoffs dessen Viskosität auf 50 mPas bis 200 mPas erhöht. Durch eine solche Viskositätserhöhung wird garantiert, dass die Klebstofftropfen beim Applizieren der Übertragungslage auf das Substrat nicht verquetscht werden, so dass die Übertragungslage im Wesentlichen mit der beim Drucken des Klebstoffs erzielten Auflösung auf das Substrat übertragen werden kann.

Das Aufbringen des zumindest einen mit Klebstoff versehenen Teilbereichs der Übertragungslage auf das Substrat erfolgt dabei bevorzugt zwischen einer Presswalze und einer Gegendruckwalze.

Hierdurch wird eine über die ganze Breite des Substrats konstante Linienpressung und damit eine gleichmäßige und hochqualitative Applikation der Übertragungslage erreicht.

Es ist dabei zweckmäßig, wenn das Aufbringen des zumindest einen mit Klebstoff versehenen Teilbereichs der Übertragungslage auf das Substrat mit einem Anpressdruck von 10 N bis 80 N erfolgt. Innerhalb dieses Bereichs kann der Anpressdruck variiert werden, um das Verfahren an die Substratbeschaffenheit anzupassen und Beschädigungen oder Verformungen des Substrats zu verhindern.

Vorteilhafterweise erfolgt das Aufbringen des zumindest einen mit Klebstoff versehenen Teilbereichs der Übertragungslage auf das Substrat 0,2 s bis 1,7 s nach dem Vorhärten des Klebstoffs. In diesem Zeitraum kann die Vorhärtereaktion voranschreiten, ohne dass eine übermäßige Härtung des Klebstoffs erfolgt, welche die Haftung beeinträchtigen könnte.

Es ist weiter bevorzugt, wenn das Substrat vor dem Aufbringen des zumindest einen mit Klebstoff versehenen Teilbereichs der Übertragungslage vorbehandelt wird, insbesondere durch eine Koronabehandlung, eine Plasmabehandlung, durch Beflammen oder durch eine Beschichtung mit einer Lackschicht, insbesondere einer Farblackschicht und/oder einer Primerschicht. Hierdurch kann auch bei für sich genommen schlecht haftfähigen Substraten die Klebstoffhaftung verbessert werden, so dass auch bei solchen Substraten eine zuverlässige und randscharfe Applikation der Übertragungslage möglich wird.

Das Aushärten des Klebstoffs 0,2 s bis 1,7 s erfolgt dabei bevorzugt nach dem Aufbringen der Übertragungslage auf das Substrat. Bei den üblichen Transportgeschwindigkeiten von Substrat und Folie wird so ein hinreichender räumlicher Abstand zwischen der Walzenanordnung und der Aushärtestation sichergestellt.

Es ist dabei zweckmäßig, wenn das Aushärten des Klebstoffs mit UV-Licht erfolgt, dessen Energie zu mindestens 90% im Wellenlängenbereich zwischen 380 nm und 420 nm abgestrahlt wird. Bei diesen Wellenlängen wird insbesondere bei den oben geschilderten Klebstoffformulierungen die radikalische Aushärtung zuverlässig in Gang gesetzt.

Ferner ist es bevorzugt, wenn das Aushärten des Klebstoffs mit einer Brutto-Bestrahlungsstärke von 12 W/cm$^2$ bis 20 W/cm$^2$ und/oder einer Netto-Bestrahlungsstärke von 4,8 W/cm$^2$ bis 8 W/cm$^2$ und/oder einem Energieeintrag in den Klebstoff von 200 mJ/cm$^2$ bis 900 mJ/cm$^2$, bevorzugt von 200 mJ/cm$^2$ bis 400 mJ/cm$^2$erfolgt. Bei einem derartigen Energieeintrag wird eine zuverlässige Durchhärtung des Klebstoffs erreicht, so dass nach dem Aushärteschritt die Trägerlage der Folie abgezogen werden kann, ohne dass die applizierte Übertragungslage beschädigt wird.

Ferner ist es vorteilhaft, wenn das Aushärten des Klebstoffs mit einer Belichtungszeit von 0,04 s bis 0,112 s erfolgt. Bei den angegebenen Brutto-Bestrahlungsstärken und den üblichen Transportgeschwindigkeiten wird so der notwendige Nettoenergieeintrag für die Durchhärtung des Klebstoffs sichergestellt.

Es ist ferner bevorzugt, wenn das Ablösen der Trägerlage 0,2 s bis 1,7 s nach dem Aushärten des Klebstoffs erfolgt. Bei den üblichen Transportgeschwindigkeiten von Substrat und Folie wird so ein hinreichender räumlicher Abstand zwischen der Aushärtestation und der Ablösestation sichergestellt.

Zusätzlich zur Verwendung des beschriebenen UV-härtbaren Klebstoffs kann das Aufbringen eines thermoplastischen Toners als Haftvermittler auf zumindest einen Teilbereich des Substrats und/oder der Übertragungslage vorgesehen sein. Zur Applikation der Folie wird nach dem Aufbringen der Folie auf das Substrat Druck und Wärme auf die Folie und/oder das Substrat so in diesen Schichtverbund eingebracht, dass der thermoplastische Toner aufschmilzt und die Übertragungslage der Folie mit dem Substrat verbindet.

Diese Verbindung erfolgt ähnlich wie die Applikation mittels UV-härtbarem Klebstoff ebenfalls bevorzugt in einer Walzenanordnung aus zumindest zweier zusammenwirkender Walzen, die einen Pressspalt bilden. Bevorzugt besteht die Walzenanordnung aus zumindest einer Presswalze und zumindest einer Gegendruckwalze. Die Folie und das Substrat werden durch den Pressspalt geführt. Dabei kann zumindest eine der Walzen direkt oder indirekt beheizt sein, um die entsprechende Wärme bereitzustellen. Der Anpressdruck im Pressspalt kann den erforderlichen Pressdruck bereitstellen.

Nach Verlassen der Folie und des Substrats des Pressspalts kühlt der Schichtverbund ab und der Toner erhärtet wieder. Nun kann die Trägerlage der Folie von der auf das Substrat zumindest in dem Teilbereich übertragenen Übertragungslage der Folie abgezogen werden.

Die Walzenanordnung zur Applikation der Folie mit UV-härtbarem Klebstoff auf das Substrat und die Walzenanordnung zur Applikation der Folie mit thermoplastischem Toner kann identisch oder auch unterschiedlich sein.

Die Presswalze kann eine Beschichtung aus einem Elastomer mit einer Dicke im Bereich von 3 mm bis 10 mm aufweisen, bevorzugt im Bereich von 5 mm bis 10 mm aufweisen. Bei Ausbildung eines Pressdrucks wird die Oberfläche der

Beschichtung so verformt, dass anstelle eines linienförmigen Pressspalts ein flächenförmiger Pressspalt ausgebildet wird. Der Pressspalt kann beispielsweise eine Breite von 5 mm bis 20 mm aufweisen. Es hat sich bewährt, einen Pressspalt mit einer Breite von 5 mm von 10 mm einzustellen. Der zugehörige Pressdruck kann beispielsweise im Bereich von $10^5$ Pascal (1 bar) bis $6 \times 10^5$ Pascal (6 bar) sein.

Es hat sich bewährt, den Pressdruck im Bereich von 3 x $10^5$ Pascal (3 bar) $6 \times 10^5$ Pascal (6 bar) zu wählen.

Das Elastomer kann vorzugsweise Silikonkautschuk oder ein Kunststoff sein. Es kann vorgesehen sein, dass die Beschichtung einen Härtegrad im Bereich von 60° Shore A bis 95° Shore A aufweist, bevorzugt im Bereich von 70° Shore A bis 90° Shore A aufweist.

In einer weiteren Ausbildung kann vorgesehen sein, dass das Auflageelement als die Stirnfläche einer Sonotrode einer Ultraschalllagereinrichtung ausgebildet ist. Die Ultraschalllagereinrichtung umfasst die Sonotrode und einen Ultraschallwandler. Zwischen der Sonotrode und der Unterseite des beprägten Substrats wird durch die Einwirkung des Ultraschalls ein Luftfilm ausgebildet, auf dem das beprägte Substrat gleitet. In dem dadurch aufgebauten Lagerspalt wird ein Druck zwischen der Stirnfläche der Sonotrode und der Unterseite des beprägten Substrats aufgebaut, der ebenso wie die Dicke des Luftfilms feinfühlig einstellbar ist. Es ist auch möglich, die Stirnfläche der Sonotrode mit Ansaugöffnungen auszubilden, die über Kanäle mit einer Vakuumpumpe verbunden sind, um das Substrat gegen den Druck im Lagerspalt anzusaugen und so mit dem sich einstellenden Gleichgewichtsdruck den Lagerspalt noch exakter einstellbar zu machen.

Zur Beheizung der Presswalze kann eine außerhalb der Presswalze angeordnete Heizeinrichtung vorgesehen sein. Vorzugsweise kann eine Infrarotstrahlungsheizeinrichtung mit Temperaturregler vorgesehen sein. Die Presstemperatur kann im Bereich von 100 °C bis 250 °C sein, bevorzugt im Bereich von 130 °C bis 190 °C. Es kann auch eine innerhalb der Presswalze angeordnete Heizeinrichtung vorgesehen sein. Eine solche Heizeinrichtung innerhalb der Presswalze kann zum Beispiel ein elektrisches Heizelement, insbesondere eine Heizwendel oder Heizspirale sein. Ebenso kann innerhalb der Presswalze ein temperierter Ölkreislauf angeordnet sein, der die Presswalze auf eine gewünschte Temperatur aufheizt.

Die Breite des Pressspalts ist im Wesentlichen durch den Pressdruck und durch die unter dem Pressdruck eintretende lokale Verformung der Beschichtung der Presswalze bestimmt. Der Pressspalt weist eine Breite von 5 mm bis 20 mm auf, bevorzugt eine Breite von 5 mm von 10 mm auf. In dem Pressspalt wird ein Pressdruck von $10^5$ Pascal (1 bar) bis $6 \times 10^5$ Pascal (6 bar) erzeugt, bevorzugt ein Pressdruck von $3 \times 10^5$ Pascal (3 bar) bis $6 \times 10^5$ Pascal (6 bar) erzeugt. Die Presstemperatur kann im Bereich von 100 °C bis 250 °C sein, bevorzugt im Bereich von 130 °C bis 190 °C. Die Übertragungslage wird in einer Geschwindigkeit von bis zu 75 m/min auf das Substrat übertragen. Die einzustellenden Werte für Druck, Temperatur und Geschwindigkeit sind abhängig von zahlreichen Parametern, wie den Materialeigenschaften der eingesetzten Folie, dem Dekor auf der Übertragungslage und den Materialeigenschaften des Substrats. Wegen der vielfältigen Abhängigkeiten ist eine mathematische Modellierung so aufwendig, dass die o. g. Werte ausgehend von einer Grundeinstellung der Vorrichtung vorzugsweise durch Versuche bestimmt werden.

In einem Fallbeispiel sind beispielsweise folgende Verarbeitungsparameter eingestellt worden:

| | |
|---|---|
| Temperatur an der Oberfläche der Presswalze: | 150 bis 155°C |
| Temperaturregeleinstellung: | 160°C |
| Prägedruck: | 4 bar |
| Vorschubgeschwindigkeit: | 15 m/min |
| Folie: | KURZ Digital Metal DT-H Silver |
| Toner: | HP Indigo Electrolnk black |
| Material des Substrats: | Digital Silver Bilderdruck Material 200 g/m$^2$ |
| Bogengröße: | 500 mm x 320 mm |

Wird dieselbe Walzenanordnung für beide Varianten verwendet, kann das Heizelement bei Applikation von Folie mit dem UV-härtbarem Kleber deaktiviert sein. Ebenso können die UV-Lichtquellen zur Aushärtung des Klebstoffs bei Applikation von Folie mit thermoplastischem Toner deaktiviert sein.

Es ist alternativ möglich, unterschiedliche Walzenanordnungen für die Applikation von Folie auf das Substrat mittels UV-härtbarem Klebstoff einerseits und für die Applikation von Folie auf das Substrat mittels thermoplastischem Toner andererseits zu verwenden. Dafür können beide Walzenanordnungen beispielsweise in Förderrichtung des Substrats und der Folie so hintereinander angeordnet sein, dass je nach Wahl der Applikationsvariante unterschiedliche Förderwege zumindest für die Folie ausgewählt werden. Dadurch kann die Folie der jeweiligen Walzenanordnung zugeführt werden und von der jeweiligen Walzenanordnung die Applikation durchgeführt werden.

Die Applikation der Folie mittels UV-härtbarem Klebstoff und mit thermoplastischem Toner auf ein Substrat kann quasi gleichzeitig in zwei aufeinanderfolgenden Bearbeitungsschritten erfolgen.

Bei einer quasi gleichzeitigen Verwendung können zwei oben beschriebene Walzenanordnungen in Laufrichtung des Substrats sequentiell hintereinander angeordnet sein und es können zwei verschiedene Folien mit den beiden unterschiedlichen Applikationsarten auf ein gemeinsames Substrat oder auch auf unterschiedliche Substrate appliziert werden.

Es ist dabei bevorzugt, wenn die Applikation mittels thermoplastischem Toner zuerst erfolgt, wobei Druck und Wärme auf die Folie und das Substrat einwirkt. In einem folgenden Bearbeitungsschritt kann dann die Folie mit UV-härtbarem Klebstoff appliziert werden, wobei dann auf die eventuell schon applizierte Folie auf dem Substrat insbesondere nicht erneut mit Wärme belastet wird. Dadurch wird das Substrat und vor allem die Folie vor Beschädigung und/oder Wiederablösung geschützt.

Bevorzugt wird eine Folie verwendet, die eine Trägerlage aus Polyester, Polyolefin, Polyvinyl, Polyimid, ABS, PET, PC, PP, PE, PVC oder PS mit einer Schichtdicke von 5 $\mu$m bis 50 $\mu$m, bevorzugt von 7 $\mu$m bis 23 $\mu$m aufweist. Die Trägerlage schützt und stabilisiert die Übertragungslage während der Herstellung, Lagerung und Verarbeitung der Folie. Soll beim Vor- oder Durchhärten des Klebstoffs von Seite der Trägerlage aus mit UV-Licht belichtet werden, so ist die Materialauswahl nach der entsprechenden Transparenz der Trägerlage im Belichtungswellenlängenbereich zu richten.

Es ist weiter zweckmäßig, wenn eine Folie verwendet wird, deren Übertragungslage eine Ablöseschicht aus Acrylat-Copolymer, insbesondere aus einem wässrigen Polyurethan-Copolymer, und bevorzugt frei von Wachs und/oder frei von Silikon, mit einer Schichtdicke von 0,01 $\mu$m bis 2 $\mu$m, bevorzugt von 0,1 $\mu$m bis 0,5 $\mu$m aufweist, welche auf einer Oberfläche der Trägerlage angeordnet ist. Die Ablöseschicht ermöglicht ein einfaches und beschädigungsfreies Ablösen der Trägerlage von der Übertragungslage nach deren Applikation auf das Substrat.

Weiter ist es bevorzugt, wenn eine Folie verwendet wird, deren Übertragungslage eine Lackschicht aus Nitrocellulose, Polyacrylat und Polyurethan-Copolymer mit einer Schichtdicke von 0,1 $\mu$m bis 5 $\mu$m, bevorzugt von 1 $\mu$m bis 2 $\mu$m aufweist, welche auf einer der Trägerlage abgewandten Oberfläche der Ablöseschicht angeordnet ist. Die Lackschicht kann dabei transparent, transluzent oder transparent eingefärbt, transluzent eingefärbt oder opak eingefärbt sein.

Ferner wird bevorzugt eine Folie verwendet, deren Übertragungslage eine Metallschicht aus Aluminium und/oder Chrom und/oder Silber und/oder Gold und/oder Kupfer mit einer Schichtdicke von 10 nm bis 200 nm, bevorzugt von 10 nm bis 50 nm aufweist, welche auf einer der Trägerlage abgewandten Oberfläche der Lackschicht angeordnet ist.

Alternativ oder zusätzlich zu der Metallschicht kann auch eine Schicht aus einem HRI-Material (HRI = High Refractive Index) vorgesehen sein. HRI-Materialien sind beispielsweise Metalloxide wie ZnS, $TiO_x$ oder auch Lacke mit entsprechenden Nanopartikeln.

Sowohl die Lackschicht als auch die Metallschicht erzeugen den gewünschten dekorativen Effekt der Übertragungslage nach deren Übertragung auf das Substrat. Durch die Kombination von verschiedenen Lackfarben und Metallen können dabei besonders ansprechende Designs verwirklicht werden.

Besonders vorteilhaft ist es, wenn eine Folie verwendet wird, deren Übertragungslage eine Grundierungsschicht aus Polyacrylaten und/oder Vinylacetatcopolymeren mit einer Schichtdicke von 0,1 $\mu$m bis 1,5 $\mu$m, bevorzugt von 0,5 $\mu$m bis 0,8 $\mu$m aufweist, welche eine der Trägerlage abgewandte Oberfläche der Übertragungslage ausbildet. Die Grundierungsschicht kann dabei in ihren physikalischen und chemischen Eigenschaften bezüglich des verwendeten Klebstoffs optimiert werden, so dass weitestgehend unabhängig vom Substrat eine optimale Haftung zwischen Substrat und Übertragungslage gewährleistet ist. Ferner garantiert eine derart optimierte Grundierungsschicht, dass der aufgetragene Klebstoff in der gewünschten Auflösung weitgehend ohne Verlaufen, Spreiten oder Verquetschen auf der Übertragungslage verbleibt.

Dabei ist es insbesondere zweckmäßig, wenn die Grundierungsschicht mikroporös ist und insbesondere eine Oberflächenrauigkeit im Bereich von 100 nm bis 180 nm, insbesondere im Bereich von 120 nm bis 160 nm aufweist. Der Klebstoff kann in eine solche Schicht partiell eindringen und wird dadurch besonders gut in hoher Auflösung fixiert.

Besonders günstig hat sich erwiesen, dass eine Grundierungsschicht mit einer Pigmentierungszahl von 1,5 $cm^3$/g bis 120 $cm^3$/g zum Einsatz kommt, insbesondere der Bereich von 10 $cm^3$/g bis 20 $cm^3$/g.

Nachfolgend ist die Zusammensetzung einer Grundierungsschicht zur Berechnung angegeben (Angaben in Gramm):

| 4900 | organisches Lösungsmittel Äthylalkohol |
|------|----------------------------------------|
| 150 | organisches Lösemittel Toluol |
| 2400 | organisches Lösemittel Aceton |
| 600 | organisches Lösemittel Benzin 80/110 |
| 150 | Wasser |

| 120 | Bindemittel I: Ethyl Methacrylat Polymer |
|---|---|
| 250 | Bindemittel II: Vinylacetathomopolymer |
| 500 | Bindemittel III: Vinylacetat Vinyllaurat Copolymer, FK = 50 +/- 1 % |
| 400 | Bindemittel IV: Iso-Butylmethacrylat |
| 20 | Pigment multifunktionales Siliziumoxid, mittlere Teilchengröße 3 $\mu$m |
| 5 | Füllstoff mikronisiertes Amidwachs, Teilchengröße 3 $\mu$m bis 8 $\mu$m |

Dabei gilt für die Pigmentierungszahl für diese Klebeschicht:

$$PZ = \sum_{1}^{x} \frac{(m_P \times f)_x}{(m_{BM} + m_A)} = \frac{20g \times 750}{1020g + 0g} = 14,7 \text{ cm}^3/\text{g}$$

Mit:
mp = 20 g multifunktionales Siliziumoxid

$$f = \text{ÖZ}/d = 300 / 0,4 \text{ g/cm}^3 = 750 \text{ cm}^3/\text{g für multifunktionales Siliziumoxid}$$

$$m_{BM} = 120 \text{ g Bindemittel I} + 250 \text{ g Bindemittel II} + (0,5 \times 500 \text{ g}) \text{ Bindemittel III} +$$

$$400 \text{ g Bindemittel IV} = 1020 \text{ g}$$

$m_A = 0$ g

Auf diese Weise lassen sich ausgehend von einer für gut befundenen Zusammensetzung der Grundierungsschicht schnell und unkompliziert dazu abweichende weitere mögliche Pigmentierungen errechnen.

Weiterhin ist es zweckmäßig, wenn die Grundierungsschicht eine Oberflächenspannung von 38 mN/m bis 46 mN/m, bevorzugt von 41 mN/m bis 43 mN/m aufweist. Solche Oberflächenspannungen erlauben es, dass Klebstofftropfen, insbesondere von Klebstoffsystemen wie oben beschrieben, mit definierter Geometrie auf der Oberfläche haften ohne zu verlaufen.

Besonders günstig hat sich bei der nicht erfindungsgemäßen Verwendung eines thermoplastischen Toners erwiesen, dass eine Grundierungsschicht mit einer Pigmentierungszahl von 0,5 cm$^3$/g bis 120 cm$^3$/g zum Einsatz kommt, insbesondere der Bereich von 1 cm$^3$/g bis 10 cm$^3$/g.

Nachfolgend ist die Zusammensetzung einer Grundierungsschicht für diesen Einsatz zur Berechnung angegeben (Angaben in Gramm):

| 340 | organisches Lösungsmittel Äthylalkohol |
|---|---|
| 3700 | organisches Lösemittel Toluol |
| 1500 | organisches Lösemittel Aceton |
| 225 | Bindemittel I: Chloriertes Polypropylen |
| 125 | Bindemittel II: Poly-n-Butyl-Methyl-Methacrylat |
| 35 | Bindemittel III: n-Butyl-Methyl-Methyl-Methacrylat Copolymer |
| 148 | Pigment multifunktionales Siliziumoxid, mittlere Teilchengröße 12 nm |

Dabei gilt für die Pigmentierungszahl für diese Grundierungsschicht:

$$PZ = \sum_{1}^{x} \frac{(m_P \times f)_x}{(m_{BM} + m_A)} = \frac{148g \times 4,4}{385g + 0g} = 1,69 \text{ cm}^3/\text{g}$$

Mit:
mp = 148 g multifunktionales Siliziumoxid

$$f = \text{ÖZ}/d = 220 / 50 \text{ g/cm}^3 = 4,4 \text{ cm}^3/\text{g für multifunktionales Siliziumoxid}$$

$$m_{BM} = 225\ g\ Bindemittel\ I + 125\ g\ Bindemittel\ II + 35\ g\ Bindemittel\ III = 385\ g$$

$m_A = 0\ g$.

Bevorzugt ist, dass der Schmelzbereich der Grundierungsschicht im Bereich von 60°C bis 130°C liegt, bevorzugt im Bereich 80°C bis 115°C.

Auf diese Weise lassen sich ausgehend von einer für gut befundenen Zusammensetzung der Grundierungsschicht schnell und unkompliziert dazu abweichende weitere mögliche Pigmentierungen errechnen.

Bevorzugt wird ferner vor und/oder nach dem Applizieren der Übertragungslage eine Druckschicht insbesondere mittels eines weiteren Tintenstrahldruckkopfes und/oder mittels einer weiteren xerographischen Druckvorrichtung auf das Substrat und/oder die Übertragungslage aufgebracht. Hierdurch können zusätzliche Designs bereitgestellt werden, die die Übertragungslage überlappen bzw. von dieser überlappt werden.

Weiterhin ist es zweckmäßig, wenn die erste UV-Lichtquelle eine LED-Lichtquelle ist. Mit LED-Lichtquellen kann nahezu monochromatisches Licht bereitgestellt werden, so dass sichergestellt ist, dass im zum Härten des Klebstoffs notwendigen Wellenlängenbereich die geforderte Strahlungsintensität zur Verfügung steht. Dies kann mit konventionellen Quecksilber-Mitteldruckdampflampen in der Regel nicht erreicht werden. Weiter ist es bevorzugt, wenn die erste UV-Lichtquelle in Förderrichtung der Folie eine Fensterbreite von 10 mm bis 30 mm aufweist. Hierdurch wird eine flächige Bestrahlung des aufgetragenen Klebstoffs ermöglicht. Zweckmäßigerweise ist die erste UV-Lichtquelle in Förderrichtung der Folie 1 cm bis 4 cm stromabwärts des Tintenstrahldruckkopfes angeordnet. Bei den üblichen Transportgeschwindigkeiten der Folie kann so die oben erwähnte Zeit zwischen Klebstoffauftrag und Vorhärtung eingehalten werden.

Die Gegendruckwalze oder das Gegenlager ist vorzugsweise aus einem Material ausgebildet, das einen Härtegrad im Bereich von 60° Shore A bis 95° Shore A, vorzugsweise im Bereich von 80° Shore A bis 95° Shore A und/oder einen Härtegrad im Bereich von 450 HV 10 (HV = Vickershärte) bis 520 HV 10, vorzugsweise im Bereich von 465 HV 10 bis 500 HV 10 aufweist. Beispielsweise ist dieses Material Kunststoff oder Silikon oder aber ein Metall wie Aluminium oder Stahl.

Die Materialparameter und die spezifische Geometrie der Walzenanordnung können dabei im Rahmen der angegebenen Bereiche in Abhängigkeit von den Eigenschaften des zu verarbeitenden Substrats und der zu verarbeitenden Folie angepasst werden, um einerseits eine optimale Haftung zwischen Übertragungslage und Substrat zu gewährleisten und andererseits ein Verquetschen des Klebstoffs und/oder eine Beschädigung der Übertragungslage oder des Substrats zu vermeiden.

Bevorzugt ist dabei die Walzenanordnung in einem Abstand von 10 cm bis 30 cm von der ersten UV-Lichtquelle angeordnet ist.

Bei den üblichen Transportgeschwindigkeiten von Folie und Substrat wird so die bereits oben erläuterte Vortrocknungszeit zwischen Belichtung des Klebstoffs und Applikation der Folie sichergestellt.

Ferner ist es bevorzugt, wenn die zweite UV-Lichtquelle eine LED-Lichtquelle ist. Mit LED-Lichtquellen kann nahezu monochromatisches Licht bereitgestellt werden, so dass sichergestellt ist, dass im zum Härten des Klebstoffs notwendigen Wellenlängenbereich die geforderte Strahlungsintensität zur Verfügung steht. Dies kann mit konventionellen Quecksilber-Mitteldruckdampflampen in der Regel nicht oder nur unter deutlich größerer Energieaufwendung erreicht werden.

Vorteilhafterweise weist dabei die zweite UV-Lichtquelle in Förderrichtung der Folie eine Fensterbreite von 10 mm bis 40 mm auf. Hierdurch wird eine flächige Bestrahlung des Klebstoffs sichergestellt.

Bevorzugt ist die zweite UV-Lichtquelle in Förderrichtung der Folie 10 cm bis 30 cm stromabwärts der Walzenanordnung angeordnet. Auf diese Weise wird ein hinreichender räumlicher Abstand zwischen der Walzenanordnung und der Aushärtestation sichergestellt.

Es ist ferner zweckmäßig, wenn die Abzieheinheit eine Walze mit einem Durchmesser von 0,5 cm bis 2 cm aufweist, über welche die Trägerlage abziehbar ist.

Bevorzugt ist die Abzieheinheit in Förderrichtung der Folie 10 cm bis 30 cm stromabwärts der zweiten UV-Lichtquelle angeordnet.

Bei den üblichen Transportgeschwindigkeiten von Folie und Substrat wird so die bereits oben erläuterte Trocknungszeit zwischen Applikation der Folie und Ablösung der Trägerlage sichergestellt, so dass die Trägerlage beschädigungsfrei gelöst werden kann.

Weiter ist es bevorzugt, wenn die Druckvorrichtung eine Auflagefläche zum Fixieren eines bogenförmigen Substrats aufweist. In dieser Ausführungsform handelt es sich bei der Druckvorrichtung also um einen großformatigen Flachbettdrucker. Alternativ kann die Auflagefläche auf für ein bandförmiges Substrat ausgebildet sein, um als Druckvorrichtung eine mittels Rolle-zu-Rolle arbeitende Druckmaschine vorzusehen.

Hierbei ist es vorteilhaft, wenn der Tintenstrahldruckkopf und/oder die Applikationsvorrichtung an einem jeweiligen Schlitten angeordnet sind, welcher in zwei orthogonalen Richtungen relativ zu dem zu bedruckenden Substrat beweglich ist. Auf diese Weise können alle Stellen des bogenförmigen Substrats von Tintenstrahldruckkopf und der Applikationsvorrichtung erreicht werden, ohne dass das Substrat selbst bewegt werden muss.

Alternativ hierzu kann die Druckvorrichtung eine Fördervorrichtung zum relativen Bewegen eines bogenförmigen Substrats oder eines Endlossubstrats relativ zu dem Tintenstrahldruckkopf und der Applikationsvorrichtung aufweisen.

Dabei ist es zweckmäßig, wenn der Tintenstrahldruckkopf und/oder die Applikationsvorrichtung an einem jeweiligen Schlitten angeordnet sind, welcher orthogonal zu einer Förderrichtung des zu bedruckenden Substrats beweglich ist. Diese Ausführungsform ermöglicht eine mechanisch einfachere Konstruktion der Führung von Tintenstrahldruckkopf und Applikationsvorrichtung, da ein Bewegungsfreiheitsgrad durch die Bewegung des Substrats bereitgestellt wird.

Es ist dabei zweckmäßig, wenn die Fördervorrichtung als ein zwei Walzen umlaufendes Stahlband ausgebildet ist. Ein solches Stahlband besitzt die notwendige Festigkeit um als Gegendruckplatte bei der Applikation der Folie wirken zu können.

Die Erfindung wird nun anhand von Ausführungsbeispielen näher erläutert. Es zeigen:

Fig. 1    Eine schematische Darstellung eines Ausführungsbeispiels einer Applikationsvorrichtung zum Applizieren einer Übertragungslage einer Folie auf ein Substrat;

Fig. 2    Eine schematische Darstellung eines Flachbettdruckers nach dem Stand der Technik;

Fig. 3    Eine schematische Darstellung eines Ausführungsbeispiels eines Flachbettdruckers mit einer Applikationsvorrichtung nach Fig. 1;

Fig. 4    Eine schematische Darstellung eines Großformatdruckers zur Verarbeitung von Endlossubstraten nach dem Stand der Technik;

Fig. 5    Eine schematische Darstellung eines Ausführungsbeispiels eines Großformatdruckers zur Verarbeitung von Endlossubstraten mit einer Applikationsvorrichtung nach Fig. 1;

Fig. 6    Eine schematische Schnittdarstellung durch das Ausführungsbeispiel eines Großformatdruckers nach Fig. 5;

Fig. 7    Eine schematische Schnittdarstellung durch ein Ausführungsbeispiel einer Folie nach deren Applikation auf ein Substrat;

Fig. 8    Eine schematische Darstellung eines alternativen Ausführungsbeispiels einer Applikationsvorrichtung zum Applizieren einer Übertragungslage einer Folie auf ein Substrat;

Eine Applikationsvorrichtung 1 zum Applizieren einer Übertragungslage 21 einer Folie 2 auf ein Substrat 4 umfasst eine Vorratsrolle 11, auf der die Folie 2 bereitgestellt wird.

Über Führungsrollen 12 wird die Folie 2 einem Tintenstrahldruckkopf 13 zugeführt, mittels welchem Klebstofftropfen 3 auf die Übertragungslage 21 aufgebracht werden.

Die Klebstofftropfen 3 werden anschließend mittels einer ersten UV-Lichtquelle 14 vorgehärtet. Die Folie 2 wird dann über eine Umlenkrolle 15 einer Presswalze 16 zugeführt, mittels welcher die klebstoffbeschichtete Seite der Übertragungslage 21 auf ein Substrat 4 aufgepresst wird. Der Gegendruck kann dabei durch eine Gegendruckwalze oder auch durch eine flache, feste Unterlage bereitgestellt werden, was hier nicht explizit gezeigt ist

Nach der Applikation der Folie 2 auf das Substrat 4 werden Folie 2 und Substrat 4 einer zweiten UV-Lichtquelle 17 zugeführt, durch die der Klebstoff fertig ausgehärtet wird.

Über eine weitere Walze 18 und/oder über eine, hier nicht näher gezeigte Ablösekante wird schließlich eine Trägerlage 22 der Folie 2 abgezogen und auf einer Rolle 19 aufgewickelt. Wo das Substrat 4 mit den Klebstofftropfen 3 versehen wurde, verbleibt die Übertragungslage 21 auf dem Substrat 4. Die vorgenannte Ablösekante kann so ausgeführt sein, dass ein balkenförmiger Hohlkörper ausgebildet ist, an dem eine Zuführung für ein Druckgas angeordnet ist, und dass mindestens eine Längskante des Ablöseelements als eine perforierte Ablösekante mit Ausströmöffnungen für das Druckgas zur Ausbildung eines Gaspolsters zwischen der Trägerlage und der Ablösekante ausgebildet ist. Der Ablösewinkel ist dabei abhängig von dem Durchmesser der Walze 18 oder im Falle der Ablösekante von der Ausrichtung der Ablösekante.

Mittels der Applikationsvorrichtung 1 wird also ein Klebstoff 3 per Tintenstrahldruck auf eine Grundierungsschicht der Folie 2 übertragen und vorgehärtet, welche dann unter Druck mit der Presswalze 16 auf das Substrat 4 angedrückt wird. Die Folie 2 mit dem Klebstoff 3 liegt nun auf dem Substrat an.

Im nächsten Schritt wird durch starkes UV-Licht der Klebstoff 3 zwischen Folie 2 und Substrat 4 durchgehärtet. Der Klebstoff 3 erhärtet unter UV-Licht. Nach dem Härten kann die Trägerlage 22 vom Substrat 4 abgezogen werden. Somit wurde die Übertragungslage 21 auf das Substrat appliziert.

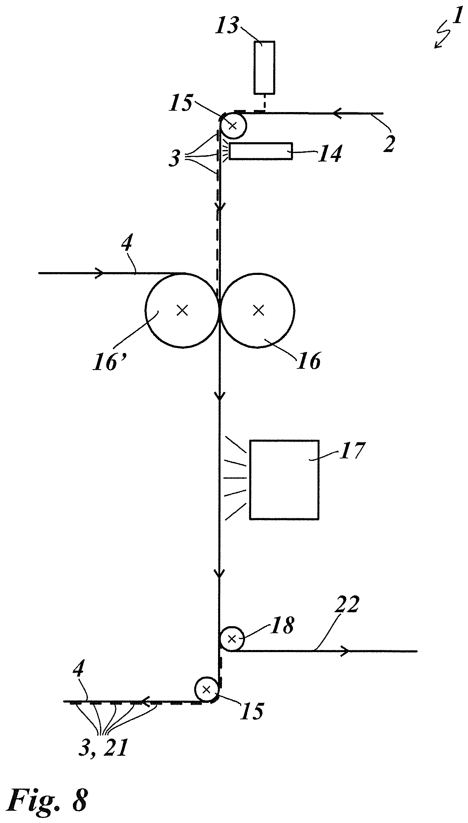

Ein alternatives Ausführungsbeispiel einer Applikationsvorrichtung 1 ist in Fig. 8 gezeigt. Hier wird der Gegendruck für die Presswalze 16 nicht durch eine flache Unterlage, sondern durch eine Gegendruckwalze 16' bereitgestellt.

Die Folie 2 wird dabei zunächst an dem Tintenstrahldruckkopf 13 vorbeigeführt und wie beschrieben mit Klebstoff 3 beschichtet. Nach dem Umlenken der Folienbahn über eine Umlenkrolle 15 erfolgt die Vorhärtung des Klebstoffs 3 durch die erste UV-Lichtquelle 14.

Die Folie 2 mit dem vorgehärteten Klebstoff wird nun zwischen die Presswalze 16 und die Gegendruckwalze 16' geführt, wo sie mit dem Substrat zusammengeführt und auf die beschriebene Weise auf dieses appliziert wird.

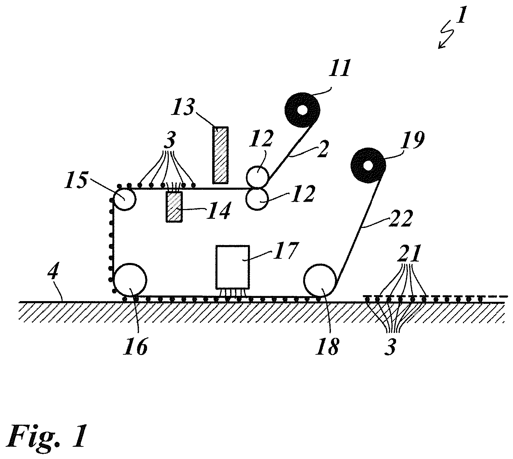

Anschließend erfolgt analog zu Fig. 1 die Aushärtung durch die zweite UV-Lichtquelle 17 und das Ablösen der Trägerlage über die Walze 18. Das beschichtete Substrat 4 wird über eine weitere Umlenkrolle 15 abgeführt und kann direkt weiterverarbeitet oder auf einer nicht gezeigten Rolle gelagert werden.

Die Folie besteht bevorzugt aus zumindest fünf Schichten: Trägerlage 22, Ablöseschicht 23, Lackschicht 24, Metallschicht 25 und Grundierung 26 (Haftschicht).

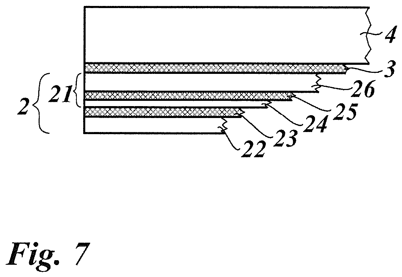

Eine schematische Querschnittsdarstellung der Folie 2 nach ihrer Applikation auf das Substrat 4, jedoch vor dem Ablösen der Trägerlage ist in Fig. 7 gezeigt. Die Trägerlage 22 besteht bevorzugt aus Polyester, Polyolefin, Polyvinyl, Polyimid, ABS, PET, PC, PP, PE, PVC oder PS mit einer Schichtdicke von 5 $\mu$m bis 50 $\mu$m, bevorzugt von 7 $\mu$m bis 23 $\mu$m. Die Trägerlage 22 schützt und stabilisiert die Übertragungslage 21 während der Herstellung, Lagerung und Verarbeitung der Folie. Soll beim Vor- oder Durchhärten des Klebstoffs von Seite der Trägerlage 22 aus mit UV-Licht belichtet werden, so ist die Materialauswahl nach der entsprechenden Transparenz der Trägerlage im Belichtungswellenlängenbereich zu richten.

Die Ablöseschicht 23 ist vorzugsweise aus Acrylat-Copolymer, insbesondere aus einem wässrigen Polyurethan-Copolymer, und bevorzugt frei von Wachs und/oder frei von Silikon, mit einer Schichtdicke von 0,01 $\mu$m bis 2 $\mu$m, bevorzugt von 0,1 $\mu$m bis 0,5 $\mu$m ausgebildet, und auf einer Oberfläche der Trägerlage 22 angeordnet.

Die Ablöseschicht 23 ermöglicht ein einfaches und beschädigungsfreies Ablösen der Trägerlage 22 von der Übertragungslage 21 nach deren Applikation auf das Substrat.

Die Lackschicht 24 besteht bevorzugt aus Nitrocellulose, Polyacrylat und Polyurethan-Copolymer mit einer Schichtdicke von 0,1 $\mu$m bis 5 $\mu$m, bevorzugt von 1 $\mu$m bis 2 $\mu$m, und ist auf einer der Trägerlage 22 abgewandten Oberfläche der Ablöseschicht 23 angeordnet.

Vorzugsweise ist die Metallschicht 25 aus Aluminium und/oder Chrom und/oder Silber und/oder Gold und/oder Kupfer mit einer Schichtdicke von 10 nm bis 200 nm, bevorzugt von 10 nm bis 50 nm ausgebildet, und auf einer der Trägerlage 22 abgewandten Oberfläche der Lackschicht 24 angeordnet.

Sowohl die Lackschicht 24 als auch die Metallschicht 25 erzeugen den gewünschten dekorativen Effekt der Übertragungslage 21 nach deren Übertragung auf das Substrat 4. Durch die Kombination von verschiedenen Lackfarben und Metallen können dabei besonders ansprechende Designs verwirklicht werden.

Die Grundierungsschicht 26 ist vorzugsweise aus Polyacrylaten und/oder Vinylacetatcopolymeren mit einer Schichtdicke von 0,1 $\mu$m bis 1,5 $\mu$m, bevorzugt von 0,5 $\mu$m bis 0,8 $\mu$m ausgebildet, und bildet eine der Trägerlage 22 abgewandte Oberfläche der Übertragungslage 21 aus.

Durch Tintenstrahldruck auf die Grundierungsschicht 26 der Folie 2 wird ein Verlaufen des Klebstoffs weitgehend verringert. Die Grundierungsschicht 26 der Folie 2 ist im Vergleich zu Substratoberflächen geringfügig mikroporös oder rau, was für schärfere und definierte Klebstoffpixel auf der Folie und später auf dem Substrat sorgt.

Die Oberflächeneigenschaften der Folie 2, insbesondere ihre Mikroporösität oder ihre Oberflächenrauigkeit oder auch die Oberflächenenergie können durch die geeignete Wahl der Grundierungsschicht 26 bzw. deren Zusammensetzung und/oder Applikationsart definiert eingestellt werden. Dies ist auf dem Substrat 4 nicht ohne weiteres möglich, da das Substrat 4 und damit dessen jeweils spezifischen Eigenschaften in der Praxis vorgegeben ist und nicht weiter modifiziert werden kann.

Um die Applikationsqualität, den Glanz der applizierten Übertragungslage 21 der Folie 2 und die Haftung weiter zu erhöhen, wird nach dem Druck des Klebstoffs 3 auf die Grundierungsschicht und vor dem Andrücken der Folie 2 auf das Substrat 4 durch die Presswalze 16 eine Teilhärtung des Klebstoffs 3 durchgeführt.

Die resultierende Viskositätsänderung des Klebstoffs 3 auf der Grundierungsschicht bietet neben den eben genannten Vorteilen auch eine Vergrößerung des verwendbaren Substratspektrums. Durch die Viskositätsänderung bildet sich eine "zähe" Klebstoffschicht auf der Grundierungsschicht, auf der nach der Applikation und Durchhärtung die metallisierte Lackschicht der Übertragungslage 21 wie ein Spiegel haftet. Dies bietet vor allem auf rauen Naturpapieren als Substrat 4 eine Verbesserung der Folienapplikation. Auch bei allen anderen Substraten 4 werden die Qualität und die Haltbarkeit der Folienapplikation erhöht.

Der Tintenstrahldruckkopf 13 ist bevorzugt als Piezo-Drop-on-Demand-Druckkopf ausgebildet. Der Druckkopf 13 muss für hochqualitative Ergebnisse über eine bestimmte physikalische Auflösung, Tropfengröße und Düsenabstand verfügen.

Die Düsen können dabei in einer oder mehreren Reihen angeordnet sein. Die physikalische Auflösung sollte erfindungsgemäß 300 npi bis 1200 npi (Nozzles per Inch, Düsen pro Zoll) betragen. Ein geringer Düsenabstand quer zur Druckrichtung sorgt dafür, dass die gedruckten Pixel ebenfalls quer zur Druckrichtung nah beieinander liegen oder je nach Klebstoffmenge überlappen. In der Regel entsprechen die npi den dpi (dots per inch, Punkte pro Zoll) auf der bedruckten Folie.

Der Düsenabstand sollte bevorzugt 50 $\mu$m bis 150 $\mu$m betragen, bei einem bevorzugten Düsendurchmesser von 15 $\mu$m bis 25 $\mu$m mit jeweils einer Toleranz von $\pm$ 5 $\mu$m, damit konstante Ergebnisse erzeugt werden.

Bei Einsatz der Graustufentechnik, können mehrere Graustufen auf demselben Pixel erzeugt werden. Die Graustufen werden in der Regel durch Abfeuern mehrerer gleichgroßer Tropfen auf einen gedruckten Pixel erzeugt. Analog zu den Graustufen beim Verdrucken von Druckfarben verhält sich die Klebstoffmenge auf der Folie 2.

Die Klebstoffmenge muss dabei je nach Saugfähigkeit der Grundierungsschicht variiert werden. Die Klebstoffmenge auf der Folie sollte bevorzugt 1,2 g/m² bis 12,6 g/m² betragen, um eine vollständige Folienapplikation auf jedem Substrat 4 zu gewährleisten. Die Schichtdicken des aufgetragenen Klebstoffs betragen dann 1,205 μm bis 12,655 μm.

Für eine optimale Benetzung der Grundierungsschicht der Folie 2 mit Klebstoff 3 sollte diese Schicht eine Oberflächenspannung von 38 mN/m bis 46 mN/m aufweisen, insbesondere der Bereich von 41 mN/m bis 43 mN/m sorgt für eine optimale Farbannahme.

Um eine hohe Auflösung in Druckrichtung zu gewährleisten, muss der Piezo-Aktuator des Tintenstrahldruckkopfes 13 die Klebstofftropfen 3 mit einer Frequenz von 6 kHz bis110 kHz abfeuern, was für Bedruckstoffgeschwindigkeiten (also Fördergeschwindigkeiten von Folie 2 und Substrat 4) von 10 m/min bis 30 m/min eine Auflösung auf der Folie 2 von 360 dpi bis 1200 dpi erzeugt.

Der Druck innerhalb der Düsenkammer des Tintenstrahldruckkopfes beträgt zum Zeitpunkt der Tropfenabgabe bevorzugt $10^5$ Pascal (1 bar) bis $1,5 \times 10^5$ Pascal (1,5 bar) und darf nicht überschritten werden, um den Piezo-Aktuator nicht zu beschädigen. In der restlichen Zeit herrscht an den Düsenöffnungen ein leichter Unterdruck von etwa -500 bis -2500 Pascal (-5 bis -25 mbar), um ein ungewolltes Austreten von Tinte zu verhindern.

Der Abstand der Düsenplatte des Tintenstrahldruckkopfs 13 zur Folie 2 darf 1 mm nicht überschreiten, um die Ablenkung der feinen Klebstofftropfen 3 durch Zugluft zu minimieren.

Das Tropfenvolumen sollte erfindungsgemäß 2 pl bis 50 pl betragen, die Toleranz beträgt ± 6 % des Tropfenvolumens. Damit werden bei einer gegebenen Auflösung die nötige und eine gleichmäßige Klebstoffmenge auf der Folie 2 erreicht.

Die Tropfengeschwindigkeit sollte im Flug bevorzugt 5 m/s bis 10 m/s ±15 % betragen, damit alle Klebstofftropfen 3 auf der Folie 2 sehr genau nebeneinander landen. Weicht die Tropfengeschwindigkeit der einzelnen Tropfen voneinander zu stark ab, wird dies durch ein unruhiges Druckbild sichtbar.

Die resultierende Pixelgröße ist von der Viskosität des Klebstoffs 3 abhängig. Für eine optimale Verdruckbarkeit des Klebstoffs 3, sollte dessen Viskosität vorzugsweise 5 mPas bis 20 mPas betragen, besonders bevorzugt 10 mPas bis15 mPas.

Um eine gleichbleibende Viskosität des Klebstoffs 3 zu gewährleisten, muss der Tintenstrahldruckkopf 13 oder das Klebstoffversorgungssystem beheizt sein. Für die genannte Viskosität muss die Klebstofftemperatur im Betrieb 40 °C bis 45 °C betragen.

Durch den Tropfenflug und das Auftreffen auf die Folie 2 erhöht sich durch Abkühlen die Viskosität der Klebstofftropfen 3, vermutlich auf 20 mPas bis 50 mPas. Eine solche Erhöhung der Viskosität wirkt einem Verlaufen oder Spreiten des Klebstoffs 3 auf der Grundierungsschicht der Folie 2 entgegen.

Der erfindungsgemäß eingesetzte Klebstoff 3 ist eine UV-härtende Tinte für den Einsatz in Piezo-Drop-on-Demand-Inkjetdruckköpfen, die insbesondere transparent oder transluzent oder auch transparent oder transluzent oder opake eingefärbt sein kann, beispielsweise grau oder schwarz eingefärbt ist. Durch einen Energieeintrag in Form von UV-Licht wird in einem solchen Klebstoff 3 (oder auch Lack, Adhäsiv) eine radikalische Kettenreaktion ausgelöst. Dabei verbinden sich Polymere und Monomere zu einem festen Netz aus Molekülen. Der Klebstoff 3 wird hart oder trocken. Durch UV-Licht in einem Wellenlängenbereich von 350 nm bis 400 nm ± 10 nm wird diese Kettenreaktion ausgelöst.

Der wesentliche Unterschied zwischen dem kationisch härtenden Klebstoff aus dem Stand der Technik im Vergleich zu solchen radikalisch-härtenden Systemen besteht darin, dass der kationische Mechanismus wesentlich langsamer abläuft, d. h. die Durchhärtung dauert länger. Für eine Folienapplikation wird jedoch ein schnell-härtendes System benötigt, da die Folie sonst nicht vollständig appliziert werden könnte.

Bei der UV-Bestrahlung kationischer Klebstoffe bildet sich zudem eine Säure, die für die Durchhärtung des Klebstoffs verantwortlich ist. Aufgrund dieses Mechanismus müssen Folien und Substrate bei der Verwendung kationisch härtender Klebstoffe zunächst auf Verträglichkeit für kationische Systeme überprüft werden, da alkalische oder basische Substanzen mancher Substratoberflächen die Durchhärtung des Klebstoffs 3 beeinflussen oder verhindern können. Zudem könnte die Säure auch nachteilig eine Metallschicht, insbesondere eine Aluminiumschicht in der Folie angreifen.

Bevorzugt wird ein transparenter Klebstoff der folgenden Zusammensetzung verwendet:

| | |
|---|---|
| 2-Phenoxyethylacrylat | 10% - 60%, bevorzugt 25%-50%; |
| 4-(1-Oxo-2-propenyl)-Morpholin | 5% - 40%, bevorzugt 10% - 25%; |
| Exo-1,7,7-trimethylbicyclo[2.2.1]- hept-2-ylacrylat | 10% - 40 %, bevorzugt 20%-25%; |
| 2,4,6-Trimethylbenzoyldiphenyl- phosphinoxid | 5%-35%, bevorzugt 10%-25%; |

(fortgesetzt)

| | |
|---|---|
| Dipropylenglykoldiacrylat | 1%-20%, bevorzugt 3%-10%; |
| Urethanacrylat oligomer | 1%-20%, bevorzugt 1%-10%. |

Das anschließende Teilhärten des Klebstoffs 3 mittels der ersten UV-Lichtquelle 14 (auch UV-Pinning genannt) findet räumlich und zeitlich nahezu direkt nach dem Druckvorgang auf die Folie statt. Nur so kann das definierte, scharfe Motiv auf der Grundierungsschicht fixiert werden. Die Fixierung wird durch eine Viskositätserhöhung des Klebstoffs, hervorgerufen durch eine teilweise Auslösung der radikalischen Kettenreaktion, erzeugt.

Räumlich findet die Teilhärtung bevorzugt 1 cm bis 4 cm nach dem Bedrucken in Maschinenrichtung durch die Folie hindurch statt, was einem zeitlichen Abstand in Maschinenrichtung von ca. 0,02 s bis 0,25 s entspricht.

Die erste UV-Lichtquelle 14 sollte bevorzugt eine Brutto-UV-Bestrahlungsstärke von 2 $W/cm^2$ bis 5 $W/cm^2$ leisten, um den nötigen und optimalen Energieeintrag in den Klebstoff zu bringen. 90 % des abgegebenen UV-Lichts sollte dabei vorzugsweise im Wellenlängenspektrum zwischen 380 nm und 420 nm liegen.

Diese Anforderung kann besonders gut von LED-UV-Systemen erfüllt werden, da diese Systeme nahezu monochromatisches UV-Licht abgeben und somit das abgegebene Wellenlängenspektrum deutlich enger ist als bei herkömmlichen Quecksilber-Mitteldruckdampflampen, bei denen das emittierte Spektrum einen größeren Wellenlängenbereich umfasst.

Ein Fenster der ersten UV-Lichtquelle 14, aus dem die Strahlung austritt, sollte in Maschinenrichtung vorzugsweise ca. 10 mm bis 30 mm groß sein, um eine flächige Bestrahlung des Klebstoffs 3 zu ermöglichen.

Je nach Bahn- und Foliengeschwindigkeit von 10 m/min bis 30 m/min (oder höher) und durch Absorption und Reflektion von 50% bis 60 % des UV-Lichts durch die Folie 2 wird die UV-Bestrahlungsstärke verringert. Zusätzlich verringert der Abstand der ersten UV-Lichtquelle 14 zu der Folienbahn die abgegebene Bestrahlungsleistung, beispielsweise bei 2 mm Bestrahlungsabstand um ca. 10%.

Beachtet man diese Faktoren, wird der Klebstoff 3 bei diesem Verfahren mit einer Netto-UV-Bestrahlungsstärke von ca. 0,7 $W/cm^2$ bis 2 $W/cm^2$ bestrahlt.

Dies entspricht einem Netto-Energieeintrag (Dosis) bei einer bevorzugten Bestrahlungszeit zwischen 0,056 s (bei 10 m/min Bahngeschwindigkeit und einem 10 mm Bestrahlungsfenster) und 0,020 s (30 m/min; 10 mm) in den Klebstoff 3 von ca. 8 $mJ/cm^2$ bis 112 $mJ/cm^2$, was je nach benötigter Teilhärtung variiert werden kann. Diese Dosis kann zusätzlich über die Bahngeschwindigkeit angepasst werden, da sich dadurch die Bestrahlungszeit ändert.

Wie bereits beschrieben, hat sich die Viskosität der Klebstofftropfen 3 auf der Folie 2 bereits vor der Teilhärtung durch Abkühlen auf vermutlich 20 bis 50 mPas erhöht. Durch die Teilhärtung wird Viskositätsänderung weiter vorangetrieben. Nach der Teilhärtung weisen die Tropfen je nach Schichtdicke eine Viskosität von vermutlich 50 mPas bis 200 mPas auf was sie zuverlässig auf der Grundierungsschicht fixiert.

Das durch den Klebstoff 3 definierte Motiv auf der Folie 2 ist nun zwar fixiert, aber noch feucht und kann im nächsten Schritt auf das Substrat 4 gedrückt werden.

An dieser Stelle des Prozesses wird die Folie 2 mit dem noch feuchten Klebstoff 3 mit der oben erwähnten Viskosität auf das Substrat 4 angedrückt. Der Druck in Form einer Linienpressung wird durch eine Presswalze 16 auf die Folie 2 und das Substrat 4 erzeugt.

Die Presswalze 16 sollte aus einem festen Kunststoff oder Gummi mit glatter Oberfläche bestehen und bevorzugt eine Härte von 70-90 Shore-A aufweisen.

Der Gegendruck wird durch eine Gegendruckwalze, oder auch, wie in Fig. 1 gezeigt, durch eine feste, flache Unterlage bereitgestellt.

Die Gegendruckwalze oder Unterlage ist bevorzugt aus einem Material ausgebildet, das einen Härtegrad im Bereich von 60° Shore A bis 95° Shore A, vorzugsweise im Bereich von 80° Shore A bis 95° Shore A und/oder einen Härtegrad im Bereich von 450 HV 10 (HV = Vickershärte) bis 520 HV 10, vorzugsweise im Bereich von 465 HV 10 bis 500 HV 10 aufweist. Beispielsweise ist dieses Material Kunststoff oder Silikon oder aber ein Metall wie Aluminium oder Stahl.

Der Radius der Presswalze 16 und gegebenenfalls der Gegendruckwalze sollte 1 cm bis 3 cm betragen.

Räumlich erfolgt das Anpressen der Folie 2 an das Substrat 4 ca. 10 cm bis 30 cm nach der Teilhärtung in Maschinenrichtung, was einem zeitlichen Abstand von ca. 0,2 s bis 1,7 s entspricht.

Die durch die Presswalze 16 ausgeübte Linienpressung sollte bevorzugt mit einer Kraft zwischen 10 N bis 80 N erfolgen, was je nach Substratbeschaffenheit angepasst werden kann.

Die Folie 2 mit dem feuchten Klebstoff 3 kann auf verschiedene Substrate 4 appliziert werden. Bevorzugt wird die Folie 2 auf Papiersubstrate mit gestrichener und ungestrichener Oberfläche, Naturpapiere, Kunststoffe (PE, PP, PET, PS, PC, PVC), Acetatkaschierungen und Etikettenmaterialien appliziert.

Bei Kunststoffsubstraten muss eventuell eine Vorbehandlung erfolgen, um die Haftung des Klebstoffs 3 auf dem Substrat 4 zu verbessern (z.B. durch AC-Coronabehandlung (AC = Alternating Current), Plasmabehandlung, Beflammen oder Beschichten mit Lacken und/oder Primern). Je glatter die Substratoberfläche ist, desto besser ist dabei das Applikationsergebnis.

Durch die Teilhärtung und die damit verbundene Viskositätsänderung des Klebstoffs 3 werden die Applikationsergebnisse auf rauen Substraten 4 im Vergleich zum herkömmlichen Verfahren ohne Viskositätsänderung deutlich verbessert.

Nach dem Andrücken der Folie 2 auf das Substrat 4 verweilt die Folie 2 mit dem noch feuchten Klebstoff 3 auf dem Substrat 4, bis der Klebstoff 3 durchgehärtet wird und die Trägerlage 22 abgezogen wird.

Beim Durchhärten (Postcuring) des Klebstoffs 3 nach der Applikation der Folie 2 erfolgt die endgültige Fixierung des Klebstoffs 3 und damit der Folie 2 auf dem Substrat 4. Die Folie 2 liegt bei diesem Schritt sehr eng auf dem noch feuchten Klebstoff 3 auf dem Substrat 4 an und kann durch Durchhärten des Klebstoffs 3 eine feste und glatte Verbindung mit dem Substrat 4 eingehen.

Die Durchhärtung erfolgt unter der zweiten UV-Lichtquelle 17, die bevorzugt als starke LED-UV-Lampe ausgebildet ist, die eine hohe Bestrahlungsleistung liefert und für eine vollständige radikalische Kettenreaktion innerhalb des Klebstoffs 3 sorgt. Die Gründe für die Verwendung eines LED-UV-System und die Faktoren für die Bestrahlungsleistung wurden bereits anhand der Vorhärtung unter der ersten UV-Lichtquelle 14 beschrieben und sind auch für diesen Prozessschritt gültig.

Die Durchhärtung erfolgt räumlich ca. 10 cm bis 30 cm nach der Folienapplikation in Maschinenrichtung, was je nach Bahngeschwindigkeit einem zeitlichen Abstand von ca. 0,2 s bis 1,7 s nach der Applikation entspricht.

Der Abstand der zweiten UV-Lichtquelle 17 zu der Folien-Substratbahn beträgt 1 mm bis 2 mm, um eine optimale Durchhärtung zu erreichen, gleichzeitig aber physikalischen Kontakt der zweiten UV-Lichtquelle 17 zum Substrat zu vermeiden. Das Bestrahlungsfenster der zweiten UV-Lichtquelle 17 sollte in Maschinenrichtung 20 mm bis 40 mm groß sein.

Die Brutto-UV-Bestrahlungsstärke sollte bevorzugt zwischen 12 W/cm$^2$ bis 20 W/cm$^2$ liegen, damit der Klebstoff 3 bei Geschwindigkeiten 10 m/min bis 30 m/min (oder höher) und den anderen, bereits anhand der Vorhärtung diskutierten Faktoren vollständig durchgehärtet wird.

Beachtet man diese Faktoren, wird der Klebstoff 3 bei diesem Verfahren mit einer Netto-UV-Bestrahlungsstärke von vorzugsweise ca. 4,8 W/cm$^2$ bis 8,0 W/cm$^2$ bestrahlt. Dies entspricht einem Netto-Energieeintrag (Dosis) bei einer bevorzugten Bestrahlungszeit zwischen 0,112 s (bei 10 m/min Bahngeschwindigkeit und einem 20 mm Bestrahlungsfenster) und 0,040 s (30 m/min; 20 mm) in den Klebstoff 3 von ca. 537 mJ/cm$^2$ bis 896 mJ/cm$^2$, was je nach benötigter Durchhärtung variiert werden kann.

Zu beachten ist, dass diese Werte nur theoretisch möglich sind (bei 100 % Lampenleistung). Bei voller Leistung der zweiten UV-Lichtquelle 17, z.B. bei der 20 W/cm$^2$-Version, und einer geringen Bahngeschwindigkeit, z.B. 10 m/min, erhitzt sich die Folien-Substratbahn so stark, dass sie Feuer fangen kann.

Deshalb liegt der Netto-Energieeintrag vorzugsweise je nach Bahngeschwindigkeit zwischen 200 mJ/cm$^2$ und 400 mJ/cm$^2$.

Nach der Durchhärtung haftet die Folie 2 vollständig auf dem Klebstoff 3 und der Klebstoff 3 vollständig auf dem Substrat 4. Die Trägerlage 22 kann nun abgezogen werden.

Die Ablösung der Trägerlage 22 findet bevorzugt räumlich ca. 10 cm bis 30 cm nach der Durchhärtung in Maschinenrichtung statt, was einem zeitlichen Abstand von ca. 0,2-1,7 s entspricht, je nach Bahngeschwindigkeit. Die abzulösende Trägerlage 22 wird über eine Walze 18 mit einem Radius von 0,5 cm bis 2 cm geleitet und radial über die Walze 18 abgelöst. Je nach Beschaffenheit des Substrats sollte der Ablösewinkel variabel einstellbar sein. Das Substrat 4 ist nun in den Bereichen, in denen Klebstoff 3 aufgebracht wurde, veredelt, also mit der Übertragungslage 21 versehen.

Derart veredelte Substrate 4 können in einem weiteren Prozessschritt mit Digitaldruck und vermutlich auch mit herkömmlichen Druckverfahren (z.B. Offsetdruck, Flexodruck, Tiefdruck, Buchdruck, Siebdruck) überdruckt werden. Um eine passergenaue Produktion zu ermöglichen, kann ein Passerkreuz mit gedruckt oder appliziert werden. Das veredelte Substrat 4 ist sofort bereit für weitere Prozessschritte oder die Weiterverarbeitung. Der eingesetzte Klebstoff erreicht seine optimale Durchhärtung ca. 24h nach der Härtung durch die Postcuring-UV-Lampe 17.

Besonders zweckmäßig ist die Kombination mit einem Tintenstrahl- bzw. Digitaldruckverfahren. Dabei kann die Applikationsvorrichtung 1 direkt in einen Flachbett- oder Großformatdrucker integriert werden.

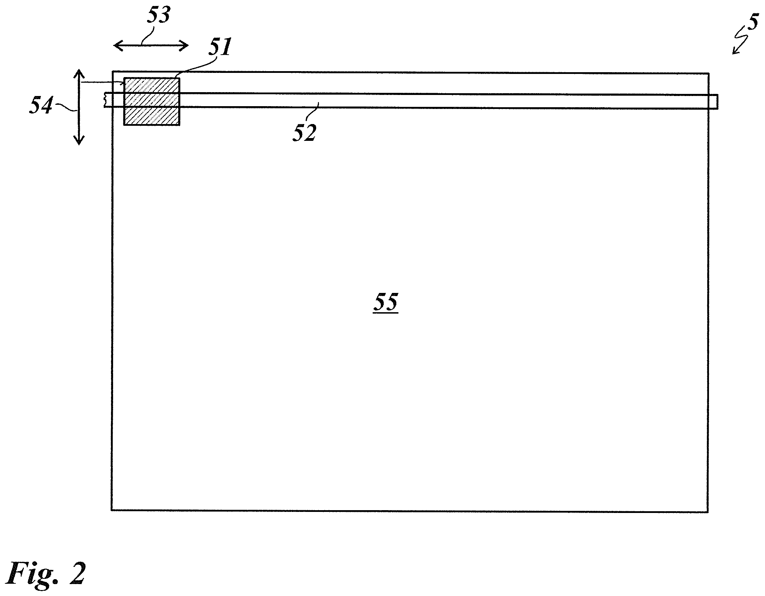

Ein Ausführungsbeispiel eines Flachbettdruckers 5 nach dem Stand der Technik ist in Fig. 2 gezeigt. Ein Tintenstrahldruckkopf 51 des Flachbettdruckers 5 ist auf einer Schiene 52 montiert und in Richtung des Pfeils 53 entlang dieser verfahrbar. Die Schiene 52 selbst ist orthogonal dazu in Richtung des Pfeils 54 beweglich, so dass der Tintenstrahldruckkopf 51 frei über eine Substratauflage 55 für bogenförmige Substrate 4 bewegt werden kann.

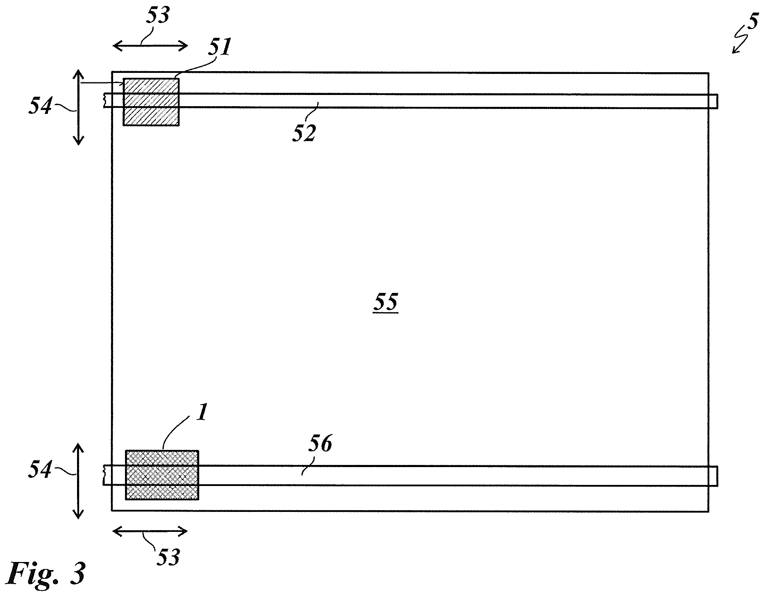

Wie Fig. 3 zeigt, kann eine Applikationsvorrichtung 1 problemlos in einen solchen Flachbettdrucker 5 integriert werden. Die Applikationsvorrichtung 1 ist dabei auf einer weiteren Schiene 56 angeordnet und auf dieser ebenfalls in Richtung des Pfeils 53 beweglich. Die Schiene 56 selbst ist orthogonal dazu wiederum in Richtung des Pfeils 54 beweglich.

Wie leicht zu erkennen ist, kann so ein auf der Substratauflage 55 angeordnetes bogenförmiges Substrat 4 sowohl vom Tintenstrahldruckkopf 51 als auch von der Applikationsvorrichtung 1 an beliebigen Stellen überstrichen werden. Damit ist es möglich, schwarzen oder farbigen Tintenstrahldruck mit der Folienapplikation zu kombinieren, wobei der Tintenstrahldruck sowohl direkt auf das Substrat 4 als auch auf die bereits applizierte Übertragungslage 21 erfolgen kann.

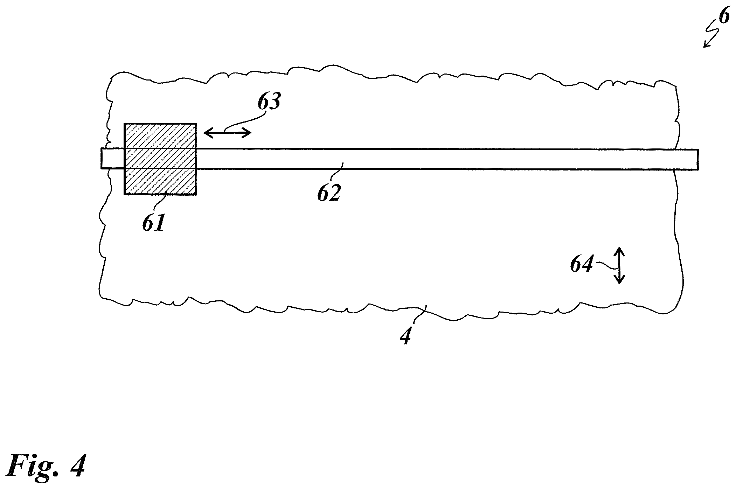

Alternativ hierzu kann eine Applikationsvorrichtung 1 auch in einen Großformatdrucker für bogenförmige oder Endlossubstrate integriert werden. Ein Ausführungsbeispiel eines solchen Druckers 6 nach dem Stand der Technik ist in Fig. 4 dargestellt.

Auch hier ist ein Tintenstrahldruckkopf 61 auf einer Schiene 62 angeordnet und in Richtung des Pfeils 63 entlang dieser beweglich. Im Gegensatz zu einem Flachbettdrucker 5 ist die Schiene 62 hierbei ortsfest. Stattdessen wird das Substrat 4 durch geeignete Fördereinrichtungen relativ zum Tintenstrahldruckkopf 61 in Richtung des Pfeils 64 orthogonal zur Bewegungsrichtung des Tintenstrahldruckkopfs 61 bewegt.

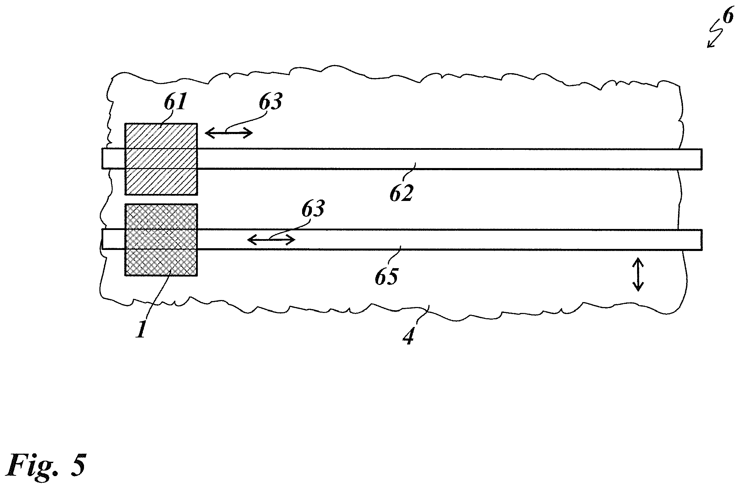

Zur Integration einer Applikationsvorrichtung 1 wird diese, wie in Fig. 5 gezeigt, auf einer weiteren Schiene 65 angeordnet, die parallel zur Schiene 62 verläuft. Die Applikationsvorrichtung 1 ist somit ebenfalls in Richtung des Pfeils 63 parallel zum Tintenstrahldruckkopf 61 beweglich. Kombiniert mit der Substratbewegung orthogonal hierzu in Richtung des Pfeils 64 kann somit auch hier das gesamte Substrat 4 sowohl vom Tintenstrahldruckkopf 61 als auch von der Applikationsvorrichtung 1 überstrichen werden, so dass die bereits anhand des Flachbettdruckers 5 erläuterten Druck- und Applikationseffekte erzielbar sind. Die Schiene 65 kann alternativ auch nach dem Tintenstrahldruckkopf 61 integriert werden, wobei dann kein Überdrucken der applizierten Übertragungslage 21 mehr möglich ist.

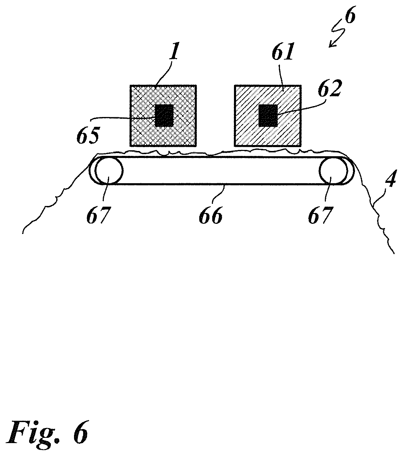

Fig. 6 zeigt im schematischen Querschnitt wie hierbei beispielsweise die Substratbewegung verwirklicht werden kann. Das Substrat 4 liegt auf einem umlaufenden Stahlband 66 auf, welches durch zwei Rollen 67 vor- und zurückbewegt werden kann. Das Stahlband 66 wirkt hierbei gleichzeitig als Gegendruckeinheit für die Applikation der Folie mit der Presswalze 16 der Applikationsvorrichtung 1.

Bezugszeichenliste

| | |
|---|---|
| 1 | Applikationsvorrichtung |
| 11 | Vorratsrolle |
| 12 | Führungsrolle |
| 13 | Tintenstrahldruckkopf |
| 14 | erste UV-Lichtquelle |
| 15 | Umlenkrolle |
| 16 | Presswalze |
| 16' | Gegendruckwalze |
| 17 | zweite UV-Lichtquelle |
| 18 | Rolle |
| 19 | Rolle |
| 2 | Folie |
| 21 | Übertragungslage |
| 22 | Trägerlage |
| 23 | Ablöseschicht |
| 24 | Lackschicht |
| 25 | Metallschicht |
| 26 | Grundierung |
| 3 | Klebstoff |
| 4 | Substrat |
| 5 | Flachbettdrucker |
| 51 | Tintenstrahldruckkopf |
| 52 | Schiene |
| 53 | Pfeil |
| 54 | Pfeil |
| 55 | Substratauflage |
| 56 | Schiene |
| 6 | Großformatdrucker |
| 61 | Tintenstrahldruckkopf |
| 62 | Schiene |
| 63 | Pfeil |
| 64 | Pfeil |

65   Schiene
66   Stahlband
67   Rolle

**Patentansprüche**

1. Verfahren zum Applizieren einer Übertragungslage (21) einer Folie (2) auf ein Substrat (4), wobei das Verfahren die folgenden Schritte umfasst:

    a) Aufbringen eines radikalisch härtbaren Klebstoffs (3) auf zumindest einen Teilbereich der Übertragungslage (21) mittels eines Tintenstrahldruckkopfs (13);
    b) Vorhärten des Klebstoffs (3) durch UV-Bestrahlung;
    c) Aufbringen des zumindest einen mit Klebstoff (3) versehenen Teilbereichs der Übertragungslage (21) auf das Substrat (4);
    d) Aushärten des Klebstoffs (3) durch UV-Bestrahlung;
    e) Abziehen einer Trägerlage (22) der Folie (2) von dem zumindest einen Teilbereich der Übertragungslage (21),

    und wobei zum Aufbringen des Klebstoffs (3) ein Tintenstrahldruckkopf (13) mit einer Auflösung von 300 bis 1200 Auftragsdüsen pro Zoll (npi, nozzles per inch) verwendet wird und/oder
    durch den Tintenstrahldruckkopf (13) Klebstofftropfen (3) mit einem Volumen von 2 pl bis 50 pl mit einer Toleranz von nicht mehr als ± 6% bereitgestellt werden.

2. Verfahren nach Anspruch 1,

    **dadurch gekennzeichnet,**
    **dass** zum Aufbringen des Klebstoffs (3) ein Tintenstrahldruckkopf (13) mit einem Düsendurchmesser von 15 $\mu$m bis 25 $\mu$m mit einer Toleranz von nicht mehr als ± 5 $\mu$m und/oder einem Düsenabstand von 50 $\mu$m bis 150 $\mu$m mit einer Toleranz von nicht mehr als ± 5 $\mu$m verwendet wird, und/oder
    **dass** durch den Tintenstrahldruckkopf (13) Klebstofftropfen (3) mit einer Frequenz von 6 kHz bis 110 kHz bereitgestellt werden, und/oder dass durch den Tintenstrahldruckkopf (13) Klebstofftropfen (3) mit einer Fluggeschwindigkeit von 5 m/s bis 10 m/s mit einer Toleranz von nicht mehr als ± 15% bereitgestellt werden, und/oder dass ein Abstand zwischen Tintenstrahldruckkopf (13) und Substrat (4) beim Aufbringen des Klebstoffs (3) 1 mm nicht überschreitet, und/oder dass eine Relativgeschwindigkeit zwischen Tintenstrahldruckkopf (13) und Übertragungslage (21) beim Aufbringen des Klebstoffs (3) 10 m/min bis 30 m/min beträgt.

3. Verfahren nach einem der vorhergehenden Ansprüche,

    **dadurch gekennzeichnet,**
    **dass** der Klebstoff (3) mit einem Flächengewicht von 0,5 g/m² bis 20 g/m² und/oder einer Schichtdicke von 0,5 $\mu$m bis 20 $\mu$m, bevorzugt von 1 $\mu$m bis 15 $\mu$m, auf den zumindest einen Teilbereich aufgebracht wird, und/oder
    **dass** der Klebstoff (3) mit einer Auftragstemperatur von 40°C bis 45°C und/oder einer Viskosität von 5 mPas bis 20 mPas, bevorzugt von 7 mPas bis 15 mPas auf die Übertragungslage (21) aufgetragen wird.

4. Verfahren nach einem der vorhergehenden Ansprüche,
    **dadurch gekennzeichnet,**
    **dass** ein Klebstoff (3) der folgenden Volumenzusammensetzung verwendet wird:

    | | |
    |---|---|
    | 2-Phenoxyethylacrylat | 10% - 60%, bevorzugt 25%-50%; |
    | 4-(1-Oxo-2-propenyl)-morpholin | 5% - 40%, bevorzugt 10% - 25%; |
    | Exo-1,7,7-trimethylbicyclo[2.2.1]-hept-2-ylacrylat | 10% - 40 %, bevorzugt 20%-25%; |
    | 2,4,6-Trimethylbenzoyldiphenyl-phosphinoxid | 5%-35%, bevorzugt 10%-25%; |
    | Dipropylenglykoldiacrylat | 1%-20%, bevorzugt 3%-10%; |
    | Urethanacrylat oligomer | 1%-20%, bevorzugt 1%-10%, und/oder |

dass ein Klebstoff (3) mit einer Dichte von 1 g/ml bis 1,5 g/ml, bevorzugt von 1,0 g/ml bis 1,1 g/ml verwendet wird.

5.  Verfahren nach einem der vorhergehenden Ansprüche,

    **dadurch gekennzeichnet,**
    **dass** das Vorhärten des Klebstoffs (3) 0,02 s bis 0,025 s nach dem Aufbringen des Klebstoffs (3) erfolgt, und/oder dass das Vorhärten des Klebstoffs (3) mit UV-Licht erfolgt, dessen Energie zu mindestens 90% im Wellenlängenbereich zwischen 380 nm und 420 nm abgestrahlt wird, und/oder
    **dass** das Vorhärten des Klebstoffs (3) mit einer Brutto-Bestrahlungsstärke von 2 W/cm$^2$ bis 5 W/cm$^2$ und/oder einer Netto-Bestrahlungsstärke von 0,7 W/cm$^2$ bis 2 W/cm$^2$ und/oder einem Energieeintrag in den Klebstoff von 8 mJ/cm$^2$ bis 112 mJ/cm$^2$ erfolgt, und/oder
    **dass** das Vorhärten des Klebstoffs (3) mit einer Belichtungszeit von 0,02 s bis 0,056 s erfolgt, und/oder
    **dass** sich beim Vorhärten des Klebstoffs (3) dessen Viskosität auf 50 mPas bis 200 mPas erhöht.

6.  Verfahren nach einem der vorhergehenden Ansprüche,

    **dadurch gekennzeichnet,**
    **dass** das Aushärten des Klebstoffs (3) 0,2 s bis 1,7 s nach dem Aufbringen der Übertragungslage (21) auf das Substrat (4) erfolgt, und/oder
    **dass** das Aushärten des Klebstoffs (3) mit einer Brutto-Bestrahlungsstärke von 12 W/cm$^2$ bis 20 W/cm$^2$ und/oder einer Netto-Bestrahlungsstärke von 4,8 W/cm$^2$ bis 8 W/cm$^2$ und/oder einem Energieeintrag in den Klebstoff (3) von 200 mJ/cm$^2$ bis 900 mJ/cm$^2$, bevorzugt von 200 mJ/cm$^2$ bis 400 mJ/cm$^2$ erfolgt, und/oder dass das Aushärten des Klebstoffs (3) mit einer Belichtungszeit von 0,04 s bis 0,112 s erfolgt.

7.  Verfahren nach einem der vorhergehenden Ansprüche,
    **dadurch gekennzeichnet,**
    **dass** das Aufbringen des zumindest einen mit Klebstoff (3) versehenen Teilbereichs der Übertragungslage (21) auf das Substrat (4) 0,2 s bis 1,7 s nach dem Vorhärten des Klebstoffs (3) erfolgt.

8.  Verfahren nach einem der vorhergehenden Ansprüche,
    **dadurch gekennzeichnet,**
    **dass** das Ablösen der Trägerlage (22) 0,2 s bis 1,7 s nach dem Aushärten des Klebstoffs (3) erfolgt.

9.  Verfahren nach einem der vorhergehenden Ansprüche,

    **dadurch gekennzeichnet,**
    **dass** eine Folie (2) verwendet wird, deren Übertragungslage (21) eine Grundierungsschicht (26) aus Polyacrylaten und/oder Vinylacetocopolymeren mit einer Schichtdicke von 0,1 $\mu$m bis 1,5 $\mu$m , bevorzugt von 0,5 $\mu$m bis 0,8 $\mu$m, aufweist, welche eine der Trägerlage (22) abgewandte Oberfläche der Übertragungslage (21) ausbildet, insbesondere
    **dass** die Grundierungsschicht (26) mikroporös ist.

10. Verfahren nach Anspruch 9,

    **dadurch gekennzeichnet,**
    **dass** die Grundierungsschicht (26) eine Oberflächenspannung von 38 mN/m bis 46 mN/m, bevorzugt von 41 mN/m bis 43 mN/m aufweist, und/oder
    **dass** die Grundierungsschicht (26) eine Pigmentierungszahl von 0,5 cm$^3$/g bis 120 cm$^3$/g, bevorzugt von 1 cm$^3$/g bis 10 cm$^3$/g, aufweist, und/oder
    **dass** die Grundierungsschicht (26) einen Schmelzpunkt von 60°C bis 130°C, bevorzugt von 80°C bis 115°C, aufweist.

11. Verfahren nach einem der vorhergehenden Ansprüche,

    **dadurch gekennzeichnet,**
    **dass** die Übertragungslage (21) auf ein dreidimensionales, insbesondere gewölbtes, gekrümmtes, zylindrisches oder flaches Substrat (4) appliziert wird, insbesondere
    **dass** zum Applizieren der Übertragungslage (21) eine Andrückvorrichtung verwendet wird, welche insbesondere für eine zum Vorhärten und/oder Aushärten des Klebstoffs (3) verwendete Wellenlänge transparent ist.

12. Applikationsvorrichtung (1) zum Applizieren einer Übertragungslage (21) einer Folie (2) auf ein Substrat (4), wobei die Applikationsvorrichtung (1) die folgenden Komponenten umfasst:

- eine Vorratsrolle (11) zum Bereitstellen der Folie (2);
- einen in Förderrichtung der Folie (2) stromabwärts von der Vorratsrolle angeordneten Tintenstrahldruckkopf (13) zum Aufbringen eines radikalisch härtbaren Klebstoffs (3) auf zumindest einen Teilbereich der Übertragungslage (21);
- eine in Förderrichtung der Folie stromabwärts von dem Tintenstrahldruckkopf (13) angeordnete erste UV-Lichtquelle (14) zum Vorhärten des Klebstoffs (3) durch UV-Bestrahlung;
- zumindest eine in Förderrichtung der Folie (2) stromabwärts von dem Tintenstrahldruckkopf (13) angeordnete Walzenanordnung (16, 16') zum Aufbringen des zumindest einen mit Klebstoff (3) versehenen Teilbereichs der Übertragungslage (21) auf das Substrat (4);
- eine in Förderrichtung der Folie stromabwärts von der Walzenanordnung angeordnete zweite UV-Lichtquelle (17) zum Aushärten des Klebstoffs (3) durch UV-Bestrahlung;
- eine in Förderrichtung der Folie (2) stromabwärts von der Walzenanordnung (16,16') angeordnete Abzieheinheit zum Abziehen einer Trägerlage (22) der Folie (2) von dem zumindest einen Teilbereich der Übertragungslage (21);

und wobei der Tintenstrahldruckkopf (13) eine Auflösung von 300 bis 1200 Auftragsdüsen pro Zoll (npi, nozzles per inch) aufweist und/oder dass durch den Tintenstrahldruckkopf (13) Klebstofftropfen (3) mit einem Volumen von 2 pl bis 50 pl mit einer Toleranz von nicht mehr als $\pm$ 6% bereitgestellt werden.

13. Applikationsvorrichtung (1) nach Anspruch 12,
**dadurch gekennzeichnet,**
**dass** der Tintenstrahldruckkopf (13) einen Düsendurchmesser von 15 $\mu$m bis 25 $\mu$m mit einer Toleranz von nicht mehr als $\pm$ 5 $\mu$m und/oder einen Düsenabstand von 50 $\mu$m bis 150 $\mu$m mit einer Toleranz von nicht mehr als $\pm$ 5 $\mu$m aufweist.

14. Applikationsvorrichtung (1) nach einem der Ansprüche 12 bis 13, **dadurch gekennzeichnet,**
**dass** die erste UV-Lichtquelle (14) eine LED-Lichtquelle ist, und/oder dass die erste UV-Lichtquelle (14) in Förderrichtung der Folie (2) eine Fensterbreite von 10 mm bis 30 mm aufweist, und/oder dass die erste UV-Lichtquelle (14) in Förderrichtung der Folie (2) 1 cm bis 4 cm stromabwärts des Tintenstrahldruckkopfes (13) angeordnet ist.

15. Druckvorrichtung mit einem Tintenstrahldruckkopf (13), welcher in zwei orthogonalen Richtungen relativ zu einem zu bedruckenden Substrat (4) beweglich angeordnet ist, sowie mit einer Applikationsvorrichtung (1) nach einem der Ansprüche 12 bis 14, welche in zwei orthogonalen Richtungen relativ zu dem zu bedruckenden Substrat (4) beweglich angeordnet ist.

## Claims

1. Method for applying a transfer ply (21) of a film (2) to a substrate (4),
   wherein the method comprises the following steps:

   a) applying a radically curable adhesive (3) to at least one partial region of the transfer ply (21) by means of an inkjet printing head (13);
   b) pre-curing the adhesive (3) by means of UV irradiation;
   c) applying the at least one partial region, provided with adhesive (3), of the transfer ply (21) to the substrate (4);
   d) curing the adhesive (3) by means of UV irradiation;
   (e) removing a carrier ply (22) of the film (2) from the at least one partial region of the transfer ply (21),

   and wherein an inkjet printing head (13) with a resolution of from 300 to 1200 application nozzles per inch (npi) is used to apply the adhesive (3), and/or adhesive drops (3) with a volume of from 2pl to 50pl with a tolerance of no more than ±6% are provided by the inkjet printing head (13).

2. Method according to claim 1,

**characterised in that**

an inkjet printing head (13) with a nozzle diameter of from 15μm to 25μm with a tolerance of no more than ±5μm and/or a nozzle spacing of from 50μm to 150μm with a tolerance of no more than ±5μm is used to apply the adhesive (3), and/or adhesive drops (3) with a frequency of from 6 kHz to 110 kHz are provided by the inkjet printing head (13), and/or

adhesive drops (3) with a flying speed of from 5 m/s to 10 m/s with a tolerance of no more than ±15% are provided by the inkjet printing head (13), and/or

a spacing between the inkjet printing head (13) and the substrate (4) when applying the adhesive (3) does not exceed 1mm, and/or

a relative speed between the inkjet printing head (13) and the transfer ply (21) when applying the adhesive (3) is 10 m/min to 30 m/min.

3. Method according to one of the preceding claims,

**characterised in that**

the adhesive (3) is applied to the at least one partial region with a surface weight of from 0.5 g/m$^2$ to 20 g/m$^2$ and/or a layer thickness of from 0.5μm to 20μm, preferably from 1μm to 15μm, and/or

the adhesive (3) is applied to the transfer ply (21) with an application temperature of from 40°C to 45°C and/or a viscosity of from 5 mPas to 20 mPas, preferably from 7 mPas to 15 mPas.

4. Method according to one of the preceding claims,
**characterised in that**
an adhesive (3) of the following volume composition is used:

| | |
|---|---|
| 2-phenoxyethyl acrylate | 10%-60%, preferably 25%-50%; |
| 4-(1-oxo-2-propenyl)-morpholine | 5%-40%, preferably 10%-25%; |
| Exo-1,7,7-trimethylbicyclo[2.2.1]-hept-2-yl acrylate | 10%-40%, preferably 20%-25%; |
| 2,4,6-trimethylbenzoyl diphenyl phosphine oxide | 5%-35%, preferably 10%-25%; |
| Dipropyleneglycol diacrylate | 1%-20%, preferably 3%-10% |
| Urethane acrylate oligomer | 1%-20%, preferably 1%-10%, and/or |

an adhesive (3) with a density of from 1 g/ml to 1.5 g/ml, preferably from 1.0 g/ml to 1.1 g/ml, is used.

5. Method according to one of the preceding claims,

**characterised in that**

pre-curing the adhesive (3) is carried out 0.02s to 0.025s after applying the adhesive (3), and/or

pre-curing the adhesive (3) is carried with UV light whose energy is irradiated to at least 90% in the wavelength range of between 380nm and 420nm, and/or pre-curing the adhesive (3) is carried out with a gross irradiation strength of from 2 W/cm$^2$ to 5 W/cm$^2$ and/or a net radiation strength of from 0.7 W/cm$^2$ to 2 W/cm$^2$ and/or an energy input into the adhesive of from 8 mJ/cm$^2$ to 112 mJ/cm$^2$, and/or pre-curing the adhesive (3) is carried out with an exposure time of from 0.02s to 0.056s, and/or

when pre-curing the adhesive (3), its viscosity is increased to 50 mPas to 200 mPas.

6. Method according to one of the preceding claims,

**characterised in that**

curing the adhesive (3) is carried out 0.2s to 1.7s after applying the transfer ply (21) to the substrate (4), and/or

curing the adhesive (3) is carried out with a gross irradiation strength of from 12 W/cm$^2$ to 20 W/cm$^2$ and/or a net irradiation strength of from 4.8 W/cm$^2$ or 8 W/cm$^2$ and/or an energy input into the adhesive (3) of from 200 mJ/cm$^2$ to 900 mJ/cm$^2$, preferably from 200 mJ/cm$^2$ to 400 mJ/cm$^2$, and/or

curing the adhesive (3) is carried out with an exposure time of 0.04s to 0.112s.

7. Method according to one of the preceding claims,
**characterised in that**
applying the at least one partial region, provided with adhesive (3), of the transfer ply (21) to the substrate (4) is carried out 0.2s to 1.7s after pre-curing the adhesive (3).

8. Method according to one of the preceding claims,
**characterised in that**
removing the transfer ply (22) is carried out 0.2s to 1.7s after curing the adhesive (3).

9. Method according to one of the preceding claims,
**characterised in that**
a film (2) is used whose transfer ply (21) has a priming layer (26) made of polyacrylates and/or vinyl acetal copolymers with a layer thickness of from 0.1 $\mu$m to 1.5$\mu$m, preferably from 0.5$\mu$m to 0.8$\mu$m, which forms a surface of the transfer ply (21) facing away from the carrier ply (22), in particular the priming layer (26) is microporous.

10. Method according to claim 9,

**characterised in that**
the priming layer (26) has a surface tension of from 38 mN/m to 46 mN/m, preferably from 41 mN/m to 43 mN/m, and/or
the priming layer (26) has a pigmentation number of from 0.5 cm$^3$/g to 120 cm$^3$/g, preferably from 1 cm$^3$/g to 10 cm$^3$/g, and/or
the priming layer (26) has a melting point of from 60°C to 130°C, preferably from 80°C to 115°C.

11. Method according to one of the preceding claims,

**characterised in that**
the transfer ply (21) is applied to a three-dimensional, in particular arched, curved, cylindrical or flat substrate (4), in particular,
a pressing device is used to apply the transfer ply (21), which is in particular transparent at a wavelength used for pre-curing and/or curing the adhesive (3).

12. Application device (1) for applying a transfer ply (21) of a film (2) to a substrate (4), wherein the application device (1) comprises the following components:

- a supply roller (11) for providing the film (2);
- an inkjet printing head (13) arranged downstream of the supply roller in the conveying direction of the film (2) for applying a radically curable adhesive (3) to at least one partial region of the transfer ply (21);
- a first UV light source (14) arranged downstream of the inkjet printing head (13) in the conveying direction of the film for pre-curing the adhesive (3) by means of UV irradiation;
- at least one roller arrangement (16, 16') arranged downstream of the inkjet printing head (13) in the conveying direction of the film (2) for applying the at least one partial region, provided with adhesive (3), of the transfer ply (21) to the substrate (4);
- a second UV light source (17) arranged downstream of the roller arrangement in the conveying direction of the film for curing the adhesive (3) by means of UV irradiation;
- a removing unit arranged downstream of the roller arrangement (16, 16') in the conveying direction of the film (2) for removing a carrier ply (22) of the film (2) from the at least on partial region of the transfer ply (21);

and wherein
the inkjet printing head (13) has a resolution of from 300 to 1,200 application nozzles per inch (npi) and/or adhesive drops (3) with a volume of from 2 pl to 50 pl with a tolerance of no more than $\pm$6% are provided by the inkjet printing head (13).

13. Application device (1) according to claim 12,
**characterised in that**
the inkjet printing head (13) has a nozzle diameter of from 15$\mu$m to 25$\mu$m with a tolerance of no more than $\pm$5$\mu$m and/or a nozzle spacing of from 50$\mu$m to 150$\mu$m with a tolerance of no more than $\pm$5$\mu$m.

14. Application device (1) according to one of claims 12 to 13,

**characterised in that**
the first UV light source (14) is an LED light source, and/or
the first UV light source (14) has a window width of from 10mm to 30mm in the conveying direction of the film (2), and/or

the first UV light source (14) is arranged 1cm to 4cm downstream of the inkjet printing head (13) in the conveying direction of the film (2).

15. Printing device having an inkjet printing head (13), which is arranged moveably in two orthogonal directions in relation to a substrate (4) to be printed on, and having an application device (1) according to one of claims 12 to 14, which is arranged moveably in two orthogonal directions in relation to the substrate (4) to be printed on.

**Revendications**

1. Procédé d'application d'une couche à transférer (21) d'un film (2) sur un substrat (4),
   dans lequel le procédé comporte les étapes suivantes :

   a) application d'une colle (3) à durcissement radicalaire sur au moins une zone partielle de la couche à transférer (21) au moyen d'une tête d'impression à jet d'encre (13) ;
   b) prédurcissement de la colle (3) par rayonnement UV ;
   c) application d'au moins une zone partielle pourvue de colle (3) de la couche à transférer (21) sur le substrat (4) ;
   d) durcissement de la colle (3) par rayonnement UV ;
   e) décollement d'une couche support (22) du film (2) de l'au moins une zone partielle de la couche à transférer (21),

   et dans lequel pour l'application de la colle (3) une tête d'impression à jet d'encre (13) est utilisée avec une résolution de 300 à 1200 buses d'application par pouce (bpp, buses par pouce) et/ou
   des gouttelettes de colle (3) avec un volume de 2 pl à 50 pl avec une tolérance de pas plus de $\pm$ 6 % sont mises à disposition par la tête d'impression à jet d'encre (13).

2. Procédé selon la revendication 1,

   **caractérisé en ce**
   **qu'**une tête d'impression à jet d'encre (13) avec un diamètre de buse de 15 $\mu$m à 25 $\mu$m avec une tolérance de pas plus de $\pm$ 5 $\mu$m et/ou une distance de buse de 50 $\mu$m à 150 $\mu$m avec une tolérance de pas plus de $\pm$ 5 $\mu$m est utilisée pour l'application de la colle (3),
   et/ou
   **que** des gouttelettes de colle (3) à une fréquence de 6 kHz à 110 kHz sont mises à disposition par la tête d'impression à jet d'encre (13), et/ou
   **que** des gouttelettes de colle (3) avec une vitesse de vol de 5 m/s à 10 m/s avec une tolérance de pas plus de $\pm$ 15 % sont mises à disposition par la tête d'impression à jet d'encre (13), et/ou
   **qu'**une distance entre la tête d'impression à jet d'encre (13) et le substrat (4) ne dépasse pas de 1 mm lors de l'application de la colle (3), et/ou
   **qu'**une vitesse relative entre la tête d'impression à jet d'encre (13) et la couche à transférer (21) s'élève lors de l'application de la colle (3) à 10 m/min à 30 m/min.

3. Procédé selon l'une quelconque des revendications précédentes,

   **caractérisé en ce**
   **que** la colle (3) est appliquée avec un grammage de 0,5 g/m$^2$ à 20 g/m$^2$ et/ou une épaisseur de couche de 0,5 $\mu$m à 20 $\mu$m, de préférence de 1 $\mu$m à 15 $\mu$m sur l'au moins une zone partielle,
   et/ou
   **que** la colle (3) est appliquée à une température d'application de 40 °C à 45 °C et/ou une viscosité de 5 mPas à 20 mPas, de préférence de 7 mPas à 15 mPas sur la couche à transférer (21).

4. Procédé selon l'une quelconque des revendications précédentes,
   **caractérisé en ce**
   **qu'**une colle (3) de la composition de volume suivante est utilisée :

   2-acrylate de phénoxyéthyle 10 %-60 %, de préférence 25 %-50 % ;
   4-(1-oxo-2-propényle)-morpholine 5 %-40 %, de préférence 10 %-25 % ;

exo-1,7,7-triméthylbicyclo[2.2.1]-hept-2-ylacrylate 10 %-40 %, de préférence 20 %-25 % ;
oxyde de 2,4,6-triméthylbenzoyldiphénylphosphine 5 %-35 %, de préférence 10 %-25 % ;
diacrylate de dipropylène glycol 1 %-20 %, de préférence 3 %-10 % ;
oligomère d'acrylate d'uréthane 1 %-20 %, de préférence 1 %-10 %, et/ou
**qu'**une colle (3) avec une densité de 1 g/ml à 1,5 g/ml, de préférence de 1,0 g/ml à 1,1 g/ml est utilisée.

5. Procédé selon l'une quelconque des revendications précédentes,

   **caractérisé en ce**
   **que** le prédurcissement de la colle (3) est effectué de 0,02 s à 0,025 s après l'application de la colle (3), et/ou
   **que** le prédurcissement de la colle (3) est effectué avec une lumière UV, dont l'énergie est rayonnée à au moins 90 % dans la plage de longueur d'onde entre 380 nm et 420 nm, et/ou
   **que** le prédurcissement de la colle (3) est effectué avec une intensité de rayonnement brut de 2 $W/cm^2$ à 5 $W/cm^2$ et/ou une intensité de rayonnement nette de 0,7 $W/cm^2$ à 2 $W/cm^2$ et/ou un apport d'énergie dans la colle de 8 $mJ/cm^2$ à 112 $mJ/cm^2$, et/ou
   **que** le prédurcissement de la colle (3) est effectué avec un temps d'exposition de 0,02 s à 0,056 s, et/ou
   **que** lors du prédurcissement de la colle (3) sa viscosité augmente de 50 mPas à 200 mPas.

6. Procédé selon l'une quelconque des revendications précédentes,

   **caractérisé en ce**
   **que** le durcissement de la colle (3) est effectué de 0,2 s à 1,7 s après l'application de la couche à transférer (21) sur le substrat (4),
   et/ou
   **que** le durcissement de la colle (3) est effectué avec une intensité de rayonnement brute de 12 $W/cm^2$ à 20 $W/cm^2$ et/ou une intensité de rayonnement nette de 4,8 $W/cm^2$ à 8 $W/cm^2$ et/ou un apport d'énergie dans la colle (3) de 200 $mJ/cm^2$ à 900 $mJ/cm^2$, de préférence de 200 $mJ/cm^2$ à 400 $mJ/cm^2$, et/ou
   **que** le durcissement de la colle (3) est effectué avec un temps d'exposition de 0,04 s à 0,112 s.

7. Procédé selon l'une quelconque des revendications précédentes,
   **caractérisé en ce**
   **que** l'application d'au moins une zone partielle pourvue de colle (3) de la couche à transférer (21) sur le substrat (4) est effectuée de 0,2 s à 1,7 s après le prédurcissement de la colle (3).

8. Procédé selon l'une quelconque des revendications précédentes,
   **caractérisé en ce**
   **que** le détachement de la couche support (22) est effectué 0,2 s à 1,7 s après le durcissement de la colle (3).

9. Procédé selon l'une quelconque des revendications précédentes,

   **caractérisé en ce**
   **qu'**un film (2) est utilisé, dont la couche à transférer (21) présente une couche de fond (26) de polyacrylates et/ou copolymères d'acétate de vinyle avec une épaisseur de couche de 0,1 $\mu$m à 1,5 $\mu$m, de préférence de 0,5 $\mu$m à 0,8 $\mu$m qui réalise une surface éloignée de la couche support (22) de la couche à transférer (21), en particulier
   **que** la couche de fond (26) est microporeuse.

10. Procédé selon la revendication 9,

    **caractérisé en ce**
    **que** la couche de fond (26) présente une tension de surface de 38 mN/m à 46 mN/m, de préférence de 41 mN/m à 43 mN/m,
    et/ou
    **que** la couche de fond (26) présente un coefficient de pigmentation de 0,5 $cm^3/g$ à 120 $cm^3/g$, de préférence de 1 $cm^3/g$ à 10 $cm^3/g$,
    et/ou
    **que** la couche de fond (26) présente un point de fusion de 60 °C à 130 °C, de préférence de 80 °C à 115 °C.

**11.** Procédé selon l'une quelconque des revendications précédentes,

**caractérisé en ce**
**que** la couche à transférer (21) est appliquée sur un substrat (4) en trois dimensions, en particulier courbé, cintré, cylindrique ou plat, en particulier
**que** pour l'application de la couche à transférer (21) un dispositif de pression est utilisé, lequel est transparent en particulier pour une longueur d'onde utilisée pour le prédurcissement et/ou durcissement de la colle (3).

**12.** Dispositif d'application (1) pour l'application d'une couche à transférer (21) d'un film (2) sur un substrat (4), dans lequel le dispositif d'application (1) comporte les composants suivants :

- un rouleau de réserve (11) pour la mise à disposition du film (2) ;
- une tête d'impression à jet d'encre (13) agencée dans le sens de transport du film (2) en aval du rouleau de réserve pour l'application d'une colle (3) à durcissement radicalaire sur au moins une zone partielle de la couche à transférer (21) ;
- une première source de lumière UV (14) agencée dans le sens de transport du film en aval de la tête d'impression à jet d'encre (13) pour le prédurcissement de la colle (3) par rayonnement UV ;
- au moins un agencement de rouleau (16, 16') agencé dans le sens de transport du film (2) en aval de la tête d'impression à jet d'encre (13) pour l'application d'au moins une zone partielle pourvue de colle (3) de la couche à transférer (21) sur le substrat (4) ;
- une seconde source de lumière UV (17) agencée dans le sens de transport du film en aval de l'agencement de rouleau pour le durcissement de la colle (3) par rayonnement UV ;
- une unité de décollement agencée dans le sens de transport du film (2) en aval de l'agencement de rouleau (16, 16') pour le décollement d'une couche support (22) du film (2) de l'au moins une zone partielle de la couche à transférer (21) ;

et dans lequel la tête d'impression à jet d'encre (13) présente une résolution de 300 à 1200 buses d'application par pouce (bpp, buses par pouce) et/ou
que des gouttelettes de colle (3) avec un volume de 2 pl à 50 pl avec une tolérance de pas plus de $\pm$ 6 % sont mises à disposition par la tête d'impression à jet d'encre (13).

**13.** Dispositif d'application (1) selon la revendication 12,
**caractérisé en ce**
**que** la tête d'impression à jet d'encre (13) présente un diamètre de buse de 15 $\mu$m à 25 $\mu$m avec une tolérance de pas plus de $\pm$ 5 $\mu$m et/ou une distance de buse de 50 $\mu$m à 150 $\mu$m avec une tolérance de pas plus de $\pm$ 5 $\mu$m.

**14.** Dispositif d'application (1) selon l'une quelconque des revendications 12 à 13,

**caractérisé en ce**
**que** la première source de lumière UV (14) est une source de lumière à LED, et/ou
**que** la première source de lumière UV (14) présente dans le sens de transport du film (2) une largeur de fenêtre de 10 mm à 30 mm, et/ou
**que** la première source de lumière UV (14) est agencée dans le sens de transport du film (2) de 1 cm à 4 cm en aval de la tête d'impression à jet d'encre (13).

**15.** Dispositif d'impression avec une tête d'impression à jet d'encre (13) qui est agencée de manière mobile dans deux directions orthogonales par rapport à un substrat (4) à imprimer, ainsi qu'avec un dispositif d'application (1) selon l'une quelconque des revendications 12 à 14 qui est agencé de manière mobile dans deux directions orthogonales par rapport au substrat (4) à imprimer.

*Fig. 1*

**Fig. 2**

EP 3 274 174 B1

53

51

54

52

5

55

1

56

54

53

**Fig. 3**

EP 3 274 174 B1

*Fig. 4*

Fig. 5

*Fig. 6*

*Fig. 7*

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014005823 A1
- EP 2172347 A2
- EP 0269287 A2